# EUROPEAN PATENT APPLICATION

(11) **EP 4 821 794 A1**
(43) Date of publication of application: **14.10.2026**
(21) Application number: 24900669.3
(22) Date of filing: 05.12.2024
(51) Int. Cl.: B62D 6/00, B62D 101/00, B62D 119/00

(54) **MOTOR CONTROL DEVICE**

(30) Priority: 06.12.2023 JP 2023205910
(71) Applicant: JTEKT CORPORATION, Kariya-shi, Aichi 448-8652 (JP)
(72) Inventor: MIKI, Daisuke, Kariya-shi, Aichi 448-8652 (JP); TAMURA, Tsutomu, Kariya-shi, Aichi 448-8652 (JP); KIMURA, Shuuji, Kariya-shi, Aichi 448-8652 (JP)
(74) Representative: Winter, Brandl - Partnerschaft mbB
(86) International application number: PCT/JP2024/043060
(87) International publication number: WO 2025/121376

(57) **Abstract**

A motor control device includes: a warning determination unit that determines, based on detection information on an obstacle on a side of a vehicle, whether to apply warning torque for suppressing a collision of the vehicle with the obstacle; a warning torque calculation unit that calculates the warning torque when the warning determination unit determines to apply the warning torque; and a control unit that controls an electric motor such that the warning torque calculated by the warning calculation unit acts as a steering reaction force.

## Description

### TECHNICAL FIELD

The present disclosure relates to a control device for an electric motor for steering angle control.

### BACKGROUND ART

Patent Document 1 discloses a parking assistance device that performs a traveling assistance process to assist a vehicle in traveling to a target parking position, and that performs a collision avoidance process when an obstacle is detected during the traveling assistance process. The parking assistance device described in Patent Document 1 is characterized in that it minimizes the possibility of assistance interruption and acquires, as a target traveling route, a route that is as gently contoured as possible.

In a vehicle information display device described in Patent Document 2, side monitoring sensors detect information (distance, direction, and relative speed) related to vehicles and obstacles present on the sides of a host vehicle. Based on this information, determination is made on the risk to the sides of the host vehicle. For example, when determination is made that there is a high risk that a rear vehicle in an adjacent lane will come into contact with the host vehicle due to a sudden approach or lane change of the rear vehicle, a warning is displayed by a side warning display device. The vehicle information display device described in Patent Document 2 simply displays a warning when determination is made that there is a high risk to the side of the host vehicle.

### Related Art Documents

### Patent Documents

Patent Document 1: Japanese Unexamined Patent Application Publication No. 2021-62678 (JP 2021-62678 A)
Patent Document 2: Japanese Unexamined Patent Application Publication No. 2003-291689 (JP 2003-291689 A)
Patent Document 3: WO 2023/286169

### SUMMARY OF THE INVENTION

### Problem to be Solved by the Invention

An object of the present disclosure is to provide a motor control device that can suppress a vehicle collision with an obstacle on the side of the vehicle using a novel method.

### Means for Solving the Problem

One embodiment of the present disclosure provides a motor control device that controls drive of an electric motor of a steering device. The motor control device includes: a warning determination unit that determines, based on detection information on an obstacle on a side of a vehicle, whether to apply warning torque for suppressing a collision of the vehicle with the obstacle; a warning torque calculation unit that calculates the warning torque when the warning determination unit determines to apply the warning torque; and a control unit that controls the electric motor such that the warning torque calculated by the warning torque calculation unit acts as a steering reaction force.

With this configuration, it is possible to suppress the vehicle collision with an obstacle on the side of the vehicle using the novel method.

The above and other objects, features, and effects of the present disclosure will become apparent from the following description of an embodiment that will be given with reference to the accompanying drawings.

### BRIEF DESCRIPTION OF THE DRAWINGS

[FIG. 1] FIG. 1 is a schematic diagram showing a schematic configuration of an electric power steering system to which a motor control device according to an embodiment of the present disclosure is applied.
[FIG. 2] FIG. 2 is a block diagram illustrating an electrical configuration of a motor control ECU.
[FIG. 3] FIG. 3 is a graph showing an example of setting an assist torque command value Tₐₛ with respect to torsion bar torque T_{tb}.
[FIG. 4] FIG. 4 is a schematic diagram showing an example of a reference EPS model.
[FIG. 5] FIG. 5 is a block diagram showing the configuration of a manual steering command value calculation unit.
[FIG. 6] FIG. 6 is a block diagram showing the configuration of an angle control unit.
[FIG. 7] FIG. 7 is a schematic diagram showing an example of the configuration of a physical model of the electric power steering system.
[FIG. 8] FIG. 8 is a block diagram showing the configuration of a disturbance torque estimation unit.
[FIG. 9] FIG. 9 is a schematic diagram showing the configuration of a torque control unit.
[FIG. 10] FIG. 10 is a flowchart showing the procedure of a side obstacle warning torque calculation process that is performed by a side obstacle warning torque calculation unit.
[FIGS. 11] FIG. 11A is a schematic diagram showing an example of a predicted trajectory (main trajectory prediction line) when a vehicle is moving forward, and FIG. 11B is a schematic diagram showing an example of a predicted trajectory (main trajectory prediction line) when the vehicle is moving backward.
[FIGS. 12] FIG. 12A is a schematic diagram illustrating an example of a method for determining whether a first condition that there is a high possibility of colliding with a side obstacle is satisfied when the vehicle is moving forward, and FIG. 12B is a schematic diagram illustrating an example of a method for determining whether the first condition is satisfied when the vehicle is moving backward.
[FIG. 13] FIG. 13 is a graph showing characteristics of warning torque T_{SOW} with respect to an actual steering angle θ_{c} when θ_{stp,SOW} > 0 in an expression (11).
[FIG. 14] FIG. 14 is a graph showing characteristics of the warning torque T_{SOW} with respect to the actual steering angle θ_{c} when θ_{stp,SOW} < 0 in the expression (11).
[FIG. 15] FIG. 15 is a flowchart showing the procedure of a first modification of the side obstacle warning torque calculation process that is performed by the side obstacle warning torque calculation unit.
[FIG. 16] FIG. 16 is a schematic diagram illustrating a possibility that a state in which the first condition is satisfied and a state in which the first condition is not satisfied may be repeatedly switched within a short period when a collision determination region is set based on a main trajectory prediction line set using a first imaginary steering angle G1·θ_{c}.
[FIG. 17] FIG. 17 is a flowchart showing the procedure of a second modification of the side obstacle warning torque calculation process that is performed by the side obstacle warning torque calculation unit.
[FIG. 18] FIG. 18 is a schematic diagram illustrating an operation of the side obstacle warning torque calculation unit when the side obstacle warning torque calculation unit performs the side obstacle warning torque calculation process in FIG. 17.
[FIG. 19] FIG. 19 is a block diagram showing a modification of the manual steering command value calculation unit.
[FIG. 20] FIG. 20 is a block diagram showing a modification of the motor control ECU.

### MODES FOR CARRYING OUT THE INVENTION

### [Description of Embodiment of Disclosure]

One embodiment of the present disclosure provides a motor control device that controls drive of an electric motor of a steering device. The motor control device includes: a warning determination unit that determines, based on detection information on an obstacle on a side of a vehicle, whether to apply warning torque for suppressing a collision of the vehicle with the obstacle; a warning torque calculation unit that calculates the warning torque when the warning determination unit determines to apply the warning torque; and a control unit that controls the electric motor such that the warning torque calculated by the warning torque calculation unit acts as a steering reaction force.

With this configuration, it is possible to suppress the vehicle collision with the obstacle on the side of the vehicle using the novel method.

In the one embodiment of the present disclosure, the warning determination unit determines to apply the warning torque in response to satisfaction of a condition that the vehicle has a high possibility of colliding with the obstacle and a vehicle speed is equal to or smaller than a predetermined first threshold value, or a condition that the vehicle has a high possibility of colliding with the obstacle and torsion bar torque is equal to or larger than a predetermined second threshold value.

In the one embodiment of the present disclosure, the warning determination unit determines to apply the warning torque in response to satisfaction of a condition that the vehicle has a high possibility of colliding with the obstacle, a vehicle speed is equal to or smaller than a predetermined first threshold value, and torsion bar torque is equal to or larger than a predetermined second threshold value.

In the one embodiment of the present disclosure, the warning determination unit predicts a trajectory of the vehicle based on an actual steering angle, information indicating whether the vehicle is moving forward or backward, and the vehicle speed, and determines, based on a prediction result, whether the vehicle has a high possibility of colliding with the obstacle.

In the one embodiment of the present disclosure, the warning determination unit predicts a trajectory of the vehicle based on an imaginary steering angle having a larger absolute value than an actual steering angle, information indicating whether the vehicle is moving forward or backward, and the vehicle speed with the imaginary steering angle regarded as the actual steering angle, and determines, based on a prediction result, whether the vehicle has a high possibility of colliding with the obstacle.

In the one embodiment of the present disclosure, the warning determination unit is configured to: acquire a first prediction result by predicting a trajectory of the vehicle based on a first imaginary steering angle having a larger absolute value than an actual steering angle, information indicating whether the vehicle is moving forward or backward, and the vehicle speed with the first imaginary steering angle regarded as the actual steering angle, and acquire a second prediction result by predicting the trajectory of the vehicle based on a second imaginary steering angle having a larger absolute value than the first imaginary steering angle, the information indicating whether the vehicle is moving forward or backward, and the vehicle speed with the second imaginary steering angle regarded as the actual steering angle; when the warning torque is not applied, determine, based on the first prediction result, whether the vehicle has a high possibility of colliding with the obstacle; and when the warning torque is applied, determine, based on the second prediction result, whether the vehicle has a high possibility of colliding with the obstacle.

In the one embodiment of the present disclosure, the control unit includes: a manual steering command value calculation unit that calculates a manual steering command value using torsion bar torque; an integrated angle command value calculation unit that calculates an integrated angle command value by adding the manual steering command value to an automatic steering command value for driving assistance; and a first control unit that controls the electric motor based on the integrated angle command value. The manual steering command value calculation unit is configured to calculate the manual steering command value using an equation of motion of a reference model of the steering device. The warning torque is added to the equation of motion as the steering reaction force.

In the one embodiment of the present disclosure, the motor control device includes a limitation processing unit that limits an absolute value of the torsion bar torque for use in calculation by the manual steering command value calculation unit to an upper limit value or less. When the warning determination unit determines to apply the warning torque, the upper limit value is set to a value lower than the upper limit value in a normal case.

In the one embodiment of the present disclosure, the manual steering command value calculation unit is configured to calculate the manual steering command value based on the torsion bar torque and an assist torque command value calculated using the torsion bar torque. The motor control device further includes: a first limitation processing unit that limits the absolute value of the torsion bar torque for use in the calculation by the manual steering command value calculation unit to a first upper limit value or less; and a second limitation processing unit that limits an absolute value of the assist torque command value for use in calculation by the manual steering command value calculation unit to a second upper limit value or less. When the warning determination unit determines to apply the warning torque, the first upper limit value is set to a value lower than the first upper limit value in the normal case, and the second upper limit value is set to a value lower than the second upper limit value in the normal case.

In the one embodiment of the present disclosure, the control unit includes: an assist torque command value calculation unit that calculates an assist torque command value using torsion bar torque; a subtraction unit that subtracts the warning torque from the assist torque command value; and a second control unit that controls the electric motor based on a subtraction result from the subtraction unit.

In the one embodiment of the present disclosure, the motor control device includes: a first warning processing unit that performs, based on detection information on a front obstacle that is an obstacle in front of the vehicle, a first warning process for suppressing a collision of the vehicle with the front obstacle; and a second warning processing unit that performs, based on detection information on a rear obstacle that is an obstacle behind the vehicle, a second warning process for suppressing a collision of the vehicle with the rear obstacle. When the first warning process or the second warning process is performed before determination is made to apply the warning torque, the warning torque is not applied as the steering reaction force.

### [Detailed Description of Embodiment of Disclosure]

An embodiment of the present disclosure will be described in detail below with reference to the accompanying drawings.

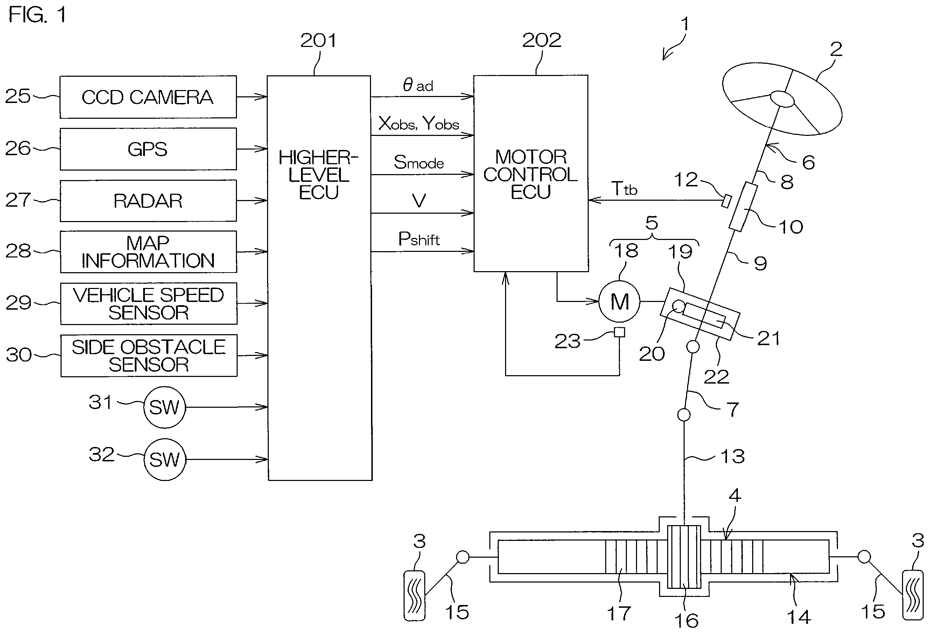

FIG. 1 is a schematic diagram showing a schematic configuration of an electric power steering system to which a motor control device according to an embodiment of the present disclosure is applied.

An electric power steering system 1 includes: a steering wheel 2 that is a steering member for steering a vehicle; a steering operation mechanism 4 that steers steered wheels 3 in conjunction with rotation of the steering wheel 2; and a steering assist mechanism 5 that assists a driver in steering. The steering wheel 2 and the steering operation mechanism 4 are mechanically connected via a steering shaft 6 and an intermediate shaft 7.

The steering shaft 6 includes an input shaft 8 connected to the steering wheel 2 and an output shaft 9 connected to the intermediate shaft 7. The input shaft 8 and the output shaft 9 are connected via a torsion bar 10 to be rotatable relative to each other.

A torque sensor 12 is disposed near the torsion bar 10. The torque sensor 12 detects torsion bar torque (steering torque) T_{tb} applied to the steering wheel 2 based on the amount of relative rotational displacement between the input shaft 8 and the output shaft 9. In the present embodiment, for example, the torsion bar torque T_{tb} that is detected by the torque sensor 12 is such that the torque for steering to the left is detected as a positive value and the torque for steering to the right is detected as a negative value. As the absolute value of the torsion bar torque T_{tb} increases, the magnitude thereof increases.

The steering operation mechanism 4 is a rack and pinion mechanism including a pinion shaft 13 and a rack shaft 14 that is a steered shaft. The steered wheels 3 are connected to the ends of the rack shaft 14 via tie rods 15 and knuckle arms (not shown). The pinion shaft 13 is connected to the intermediate shaft 7. The pinion shaft 13 is configured to rotate in conjunction with steering of the steering wheel 2. A pinion 16 is connected to a distal end of the pinion shaft 13.

The rack shaft 14 extends linearly along a right-left direction of the vehicle. A rack 17 that meshes with the pinion 16 is formed on an intermediate portion of the rack shaft 14 in an axial direction. The pinion 16 and the rack 17 convert rotation of the pinion shaft 13 into axial movement of the rack shaft 14. The steered wheels 3 can be steered by moving the rack shaft 14 in the axial direction.

When the steering wheel 2 is steered (rotated), this rotation is transmitted to the pinion shaft 13 via the steering shaft 6 and the intermediate shaft 7. The pinion 16 and the rack 17 then convert rotation of the pinion shaft 13 into axial movement of the rack shaft 14. The steered wheels 3 are thus steered.

The steering assist mechanism 5 includes an electric motor 18 that generates a steering assist force (assist torque), and a speed reducer 19 that amplifies output torque of the electric motor 18 and transmits the amplified torque to the steering operation mechanism 4. The speed reducer 19 is a worm gear mechanism including a worm gear 20 and a worm wheel 21 that meshes with the worm gear 20. The speed reducer 19 is housed in a gear housing 22 that is a transmission mechanism housing.

Hereinafter, the reduction ratio (gear ratio) of the speed reducer 19 is represented by N. The reduction ratio N is defined as a ratio (θ_{wg}/θ_{ww}) of a worm gear angle θ_{wg} that is the rotational angle of the worm gear 20 to a worm wheel angle θ_{ww} that is the rotational angle of the worm wheel 21.

The worm gear 20 is rotationally driven by the electric motor 18. The worm wheel 21 is connected to the output shaft 9 to be rotatable together.

When the worm gear 20 is rotationally driven by the electric motor 18, the worm wheel 21 is rotationally driven such that motor torque is applied to the steering shaft 6 and the steering shaft 6 (output shaft 9) is rotated. The rotation of the steering shaft 6 is then transmitted to the pinion shaft 13 via the intermediate shaft 7. Rotation of the pinion shaft 13 is converted into axial movement of the rack shaft 14. The steered wheels 3 are thus steered. That is, rotationally driving the worm gear 20 using the electric motor 18 enables steering assist by the electric motor 18 and steering of the steered wheels 3. The electric motor 18 is provided with a rotational angle sensor 23 for detecting the rotational angle of a rotor of the electric motor 18.

The torque that is applied to the output shaft 9 includes motor torque from the electric motor 18 and disturbance torque T_{lc} other than the motor torque. The disturbance torque T_{lc} other than the motor torque includes the torsion bar torque T_{tb}, road reaction torque (road load torque) Tᵣₗ, and friction torque T_{f}.

The torsion bar torque T_{tb} is torque that is applied from the steering wheel 2 side to the output shaft 9 due to a force that is applied to the steering wheel 2 by the driver, a force that is generated by steering inertia, etc.

The road reaction torque Tᵣₗ is torque that is applied from the steered wheel 3 side to the output shaft 9 via the rack shaft 14 due to self-aligning torque that is exerted on tires, a force that is generated by a suspension and tire wheel alignment, a friction force of the rack and pinion mechanism, etc.

The vehicle is equipped with a CCD (Charge Coupled Device) camera 25 that captures an image of the road ahead in the direction of travel of the vehicle, a GPS (Global Positioning System) 26 that detects the location of the vehicle, a radar 27 that detects a road shape and obstacles, a map information memory 28 storing map information, and a vehicle speed sensor 29 that detects a vehicle speed V.

The vehicle is further equipped with a side obstacle sensor 30 that detects obstacles (hereinafter sometimes referred to as "side obstacles") present on the sides of the vehicle (including obliquely forward and obliquely rearward sides). The sides of the vehicle include a left side of the vehicle, a left obliquely forward side of the vehicle, a left obliquely rearward side of the vehicle, a right side of the vehicle, a right obliquely forward side of the vehicle, and a right obliquely rearward side of the vehicle.

The side obstacle sensor 30 is, for example, a sonar that detects side obstacles. The side obstacle sensor 30 may be a CCD camera that detects side obstacles or a radar that detects side obstacles.

The vehicle is further equipped with two mode switches 31, 32 for manually switching steering modes.

As described later, the steering modes include a manual steering mode in which steering is performed by manual driving, and a cooperative steering mode in which steering can be performed based on both manual driving and autonomous driving.

The CCD camera 25, the GPS 26, the radar 27, and the map information memory 28 are connected to a higher-level ECU (ECU: Electronic Control Unit) 201 that performs driving assistance control and autonomous driving control. The higher-level ECU 201 performs surrounding environment recognition, vehicle position estimation, route planning, etc. based on information obtained by the CCD camera 25, the GPS 26, and the radar 27, and the map information, and determines control target values for steering and drive actuators.

In the present embodiment, the higher-level ECU 201 sets an automatic steering command value θ_{ad} for automatic steering. In the present embodiment, automatic steering control is control for causing the vehicle to travel, for example, along a target travel line. The automatic steering command value θ_{ad} is a target value of the steering angle for autonomously driving the vehicle along the target travel line.

In the present embodiment, the automatic steering command value θ_{ad} is expressed as a rotational amount (rotational angle) from a neutral position of the output shaft 9. The rotational amount in a leftward steering direction from the neutral position is expressed as a positive value, and the rotational amount in a rightward steering direction from the neutral position is expressed as a negative value. The automatic steering command value θ_{ad} is set based on, for example, the vehicle speed, the lateral deviation from the target travel line (lane center line), and the yaw deviation of the vehicle from the target travel line. A process of setting such an automatic steering command value θ_{ad} is well known, and therefore will not be described in detail herein.

The automatic steering control (driving assistance control) may be, for example, lane keeping assist (LKA) control for assisting in steering such that the vehicle stays within the travel lane, or lane centering assist (LCA) control for assisting in steering such that the vehicle travels at the center of a travel lane.

The higher-level ECU 201 detects a side obstacle based on the side obstacle sensor 30, and determines position coordinates of the detected side obstacle (hereinafter referred to as "side obstacle position coordinates X_{obs},Y_{obs}"). In the present embodiment, the side obstacle position coordinates X_{obs},Y_{obs} include coordinates X_{obs},Y_{obs} of a plurality of points on the contour of the side obstacle in a plan view (contour coordinates). For example, x_{obs} and y_{obs} may be an x-coordinate value and a y-coordinate value, respectively, of a vehicle coordinate system in which the width center line of a vehicle is a Y-axis and a straight line passing through a reference position of the vehicle and extending in the width direction of the vehicle is an X-axis. The reference position of the vehicle is set, for example, to a predetermined position on the width center line of the vehicle.

The higher-level ECU 201 outputs a steering mode signal S_{mode} indicating whether the steering mode (driving mode) is the manual steering mode (manual driving mode) or the cooperative steering mode (driving assistance mode) based on the operation on the first mode switch 31 and the second mode switch 32. Specifically, when the first mode switch 31 is turned ON by the driver, the higher-level ECU 201 outputs the steering mode signal S_{mode} indicating that the steering mode is the manual steering mode. When the second mode switch 32 is turned ON by the driver, the higher-level ECU 201 outputs the steering mode signal S_{mode} indicating that the steering mode is the cooperative steering mode.

The automatic steering command value θ_{ad}, the side obstacle position coordinates X_{obs},Y_{obs}, the steering mode signal S_{mode}, the vehicle speed V, and shift position information P_{shift} are provided to a motor control ECU 202 via an in-vehicle network. The shift position information P_{shift} is information indicating a current shift position such as Drive, Parking, or Reverse.

The torsion bar torque T_{tb} detected by the torque sensor 12 and an output signal from the rotational angle sensor 23 are input to the motor control ECU 202. The motor control ECU 202 controls the electric motor 18 based on these input signals and information provided from the higher-level ECU 201.

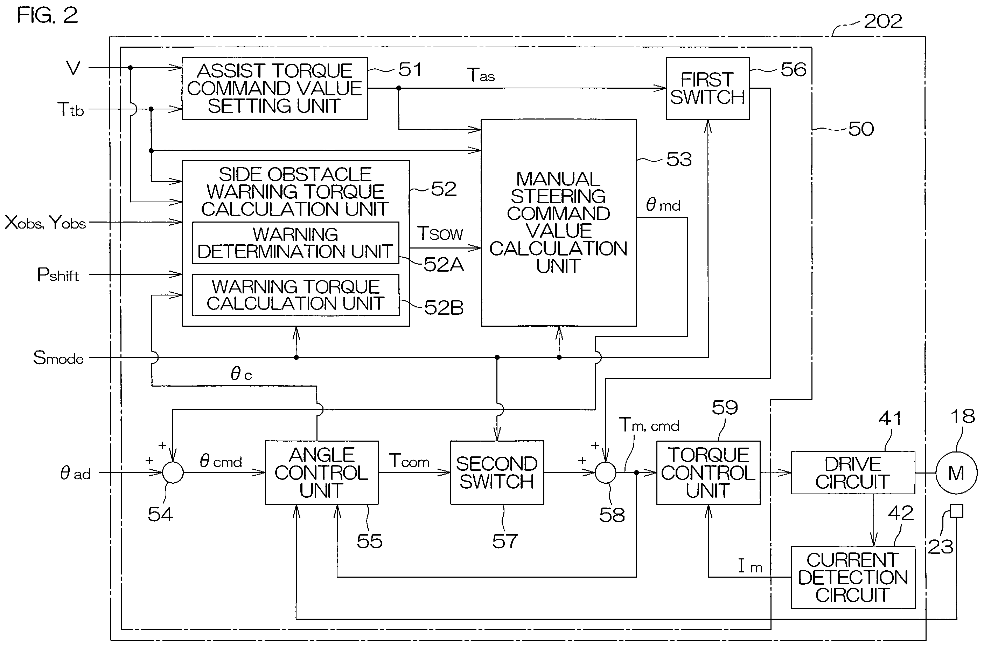

FIG. 2 is a block diagram illustrating an electrical configuration of the motor control ECU 202.

The motor control ECU 202 includes a microcomputer 50, a drive circuit (inverter circuit) 41 that is controlled by the microcomputer 50 and supplies electric power to the electric motor 18, and a current detection circuit 42 that detects a current (hereinafter referred to as "motor current Iₘ") that flows through the electric motor 18.

The microcomputer 50 includes a CPU and a memory (such as a ROM, a RAM, and a non-volatile memory), and functions as a plurality of functional processing units by executing a predetermined program. The plurality of functional processing units includes an assist torque command value setting unit 51, a side obstacle warning torque calculation unit 52 (hereinafter referred to as "warning torque calculation unit 52"), a manual steering command value calculation unit 53, an integrated angle command value calculation unit 54, an angle control unit 55, a first switch 56, a second switch 57, an addition unit 58, and a torque control unit (current control unit) 59.

The assist torque command value setting unit 51, the manual steering command value calculation unit 53, the integrated angle command value calculation unit 54, the angle control unit 55, the second switch 57, the addition unit 58, and the torque control unit 59 are examples of "control unit" according to the present disclosure. The angle control unit 55, the second switch 57, the addition unit 58, and the torque control unit 59 are examples of "first control unit" according to the present disclosure.

The assist torque command value setting unit 51 sets an assist torque command value Tₐₛ that is a target value of the assist torque necessary for a manual operation. The assist torque command value setting unit 51 sets the assist torque command value Tₐₛ based on the torsion bar torque T_{tb} detected by the torque sensor 12 and the vehicle speed V detected by the vehicle speed sensor 29.

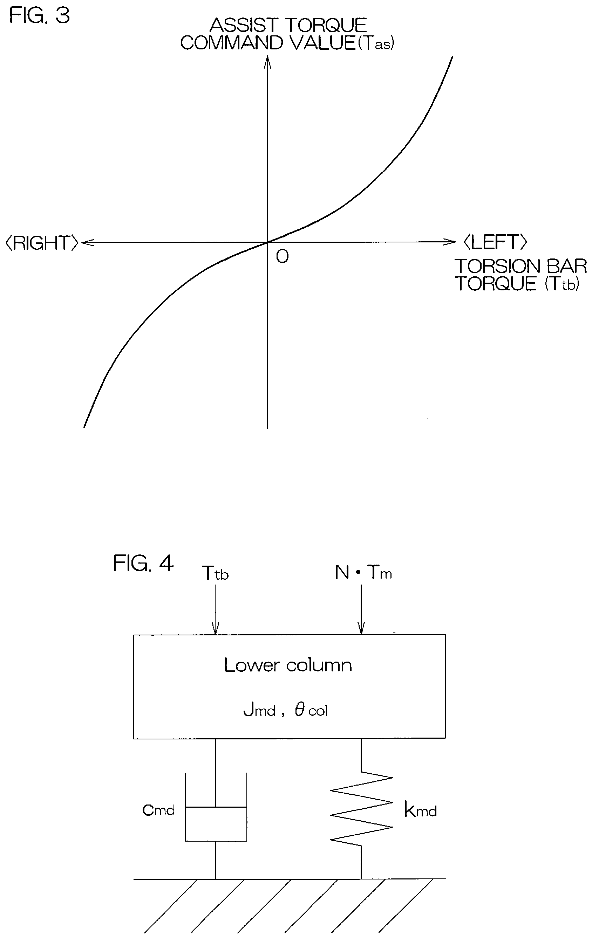

FIG. 3 is a graph showing an example of setting the assist torque command value Tₐₛ with respect to the torsion bar torque T_{tb}.

The assist torque command value Tₐₛ is set to a positive value when the electric motor 18 should generate a steering assist force for steering to the left, and is set to a negative value when the electric motor 18 should generate a steering assist force for steering to the right. The assist torque command value Tₐₛ is positive for a positive value of the torsion bar torque T_{tb}, and is negative for a negative value of the torsion bar torque T_{tb}. The assist torque command value Tₐₛ is set such that its absolute value increases as the absolute value of the torsion bar torque T_{tb} increases and its absolute value decreases as the vehicle speed V increases.

The assist torque command value setting unit 51 may calculate the assist torque command value Tₐₛ by multiplying the torsion bar torque T_{tb} by a preset constant.

In the cooperative steering mode, the warning torque calculation unit 52 calculates side obstacle warning torque (hereinafter referred to as "warning torque T_{SOW}") for suppressing a collision of the side of the vehicle with a side obstacle based on the side obstacle position coordinates X_{obs},Y_{obs}, the vehicle speed V, and the shift position information P_{shift} provided from the higher-level ECU 201, the torsion bar torque T_{tb}, and the actual steering angle θ_{c}.

The actual steering angle θ_{c} is the rotational angle of the output shaft 9, and is calculated based on the output signal from the rotational angle sensor 23 as described later. The actual steering angle θ_{c} is expressed as a rotational amount (rotational angle) from the neutral position of the output shaft 9. The rotational amount in the leftward steering direction from the neutral position is expressed as a positive value, and the rotational amount in the rightward steering direction from the neutral position is expressed as a negative value. The warning torque calculation unit 52 will be described in detail later.

The manual steering command value calculation unit 53 is provided to, when the driver operates the steering wheel 2 in the cooperative steering mode, set a steering angle (more exactly, a rotational angle θ_{c} of the output shaft 9) according to the steering wheel operation as a manual steering command value θ_{md}. In the present embodiment, the manual steering command value calculation unit 53 also has a function of generating a steering reaction force to suppress a collision of the side of the vehicle with a side obstacle in the cooperative steering mode. The manual steering command value calculation unit 53 may calculate the manual steering command value θ_{md} even in the manual steering mode.

The manual steering command value calculation unit 53 generates the manual steering command value θ_{md} using the torsion bar torque T_{tb} detected by the torque sensor 12, the assist torque command value Tₐₛ set by the assist torque command value setting unit 51, and the warning torque T_{SOW} set by the warning torque calculation unit 52. The manual steering command value calculation unit 53 will be described in detail later.

The integrated angle command value calculation unit 54 calculates an integrated angle command value θ_{cmd} by adding the manual steering command value θ_{md} to the automatic steering command value θ_{ad} set by the higher-level ECU 201.

The angle control unit 55 calculates an integrated motor torque command value T_{com} based on the integrated angle command value θ_{cmd}. The angle control unit 55 will be described in detail later.

The first switch 56 and the second switch 57 are turned ON and OFF in response to the input steering mode signal S_{mode}. Specifically, when the steering mode signal S_{mode} indicating that the steering mode is the manual steering mode is input, the first switch 56 is turned ON and the second switch 57 is turned OFF.

When the steering mode signal S_{mode} indicating that the steering mode is the cooperative steering mode is input, the first switch 56 is turned OFF and the second switch 57 is turned ON.

When the first switch 56 is ON and the second switch 57 is OFF, the addition unit 58 outputs the assist torque command value Tₐₛ as a motor torque command value T_{m,cmd} (= Tₐₛ). When the second switch 57 is ON and the first switch 56 is OFF, the addition unit 58 outputs the integrated motor torque command value T_{com} output from the angle control unit 55 as the motor torque command value T_{m,cmd} (= T_{com}).

The motor torque command value T_{m,cmd} that is the output of the addition unit 58 is provided to the torque control unit 59.

The torque control unit 59 drives the drive circuit 41 such that the motor torque of the electric motor 18 is brought closer to the motor torque command value T_{m,cmd}. The torque control unit 59 will be described in detail later.

The manual steering command value calculation unit 53 will be described in detail.

First, description will be given of a method for setting the manual steering command value θ_{md} by a manual steering command value generation unit described in Patent Document 3 (WO 2023/286169).

The manual steering command value generation unit generates the manual steering command value θ_{md} using a reference EPS model in FIG. 4. The reference EPS model in FIG. 4 is an example of "reference model of steering device" according to the present disclosure.

The reference EPS model is a single inertia model including a lower column. The lower column corresponds to the output shaft 9 and the worm wheel 21. However, this model is merely an example, and an inertia model including a component other than the above (e.g., a rack bar) may also be used. In FIG. 4, J_{md} is the inertia of the lower column (hereinafter referred to as "column inertia"), θ_{col} is the rotational angle of the lower column, and T_{tb} is the torsion bar torque. The torsion bar torque T_{tb}, torque N·Tₘ acting on the output shaft 9 from the electric motor 18, and the road reaction torque (virtual reaction force) Tᵣₗ are applied to the lower column.

The road reaction torque Tᵣₗ is given by the following expression (1) using a spring constant k_{md} of a virtual spring and a viscous damping coefficient c_{md} of a virtual damper.
[Math. 1] ${T}_{rl} = - {k}_{md} ⋅ {θ}_{col} - {c}_{md} ⋅ {\dot{θ}}_{col}$ (1)

The spring constant k_{md} and the viscous damping coefficient c_{md} are determined through experiments, analyses, etc. in advance. Hereinafter, k_{md}·θ_{col} may be referred to as a virtual spring reaction force, and c_{md}·(dθ_{col}/dt) may be referred to as a virtual damper reaction force.

An equation of motion of the reference EPS model is given by the following expression (2).
[Math. 2] ${J}_{md} ⋅ {{θ}^{¨}}_{col} = {T}_{tb} + N ⋅ {T}_{m} - {k}_{md} ⋅ {θ}_{col} - {c}_{md} ⋅ {\dot{θ}}_{col}$ (2)

In the expression (2), J_{md}·d²θ_{col}/dt² is the moment of inertia acting on the lower column.

The manual steering command value generation unit calculates the rotational angle θ_{col} of the lower column by solving the differential equation given by the expression (2) by substituting the torsion bar torque T_{tb} detected by the torque sensor 12 into T_{tb} and substituting the assist torque command value Tₐₛ set by the assist torque command value setting unit 51 into Tₘ. The manual steering command value generation unit generates the obtained rotational angle θ_{col} of the lower column as the manual steering command value θ_{md}. The method of setting the manual steering command value θ_{md} in this way will be referred to as a comparative method.

The equation of motion given by the expression (2) is equivalent to an equation of motion in which Tₘ is replaced by Tₐₛ and θ_{col} is replaced by θ_{md}.

In the present embodiment, the manual steering command value calculation unit 53 calculates the manual steering command value θ_{md} using the equation of motion (2) of the reference EPS model described above. Specifically, in the present embodiment, the manual steering command value calculation unit 53 calculates the manual steering command value θ_{md} based on an equation of motion obtained by modifying the equation of motion (2) of the reference EPS model described above.

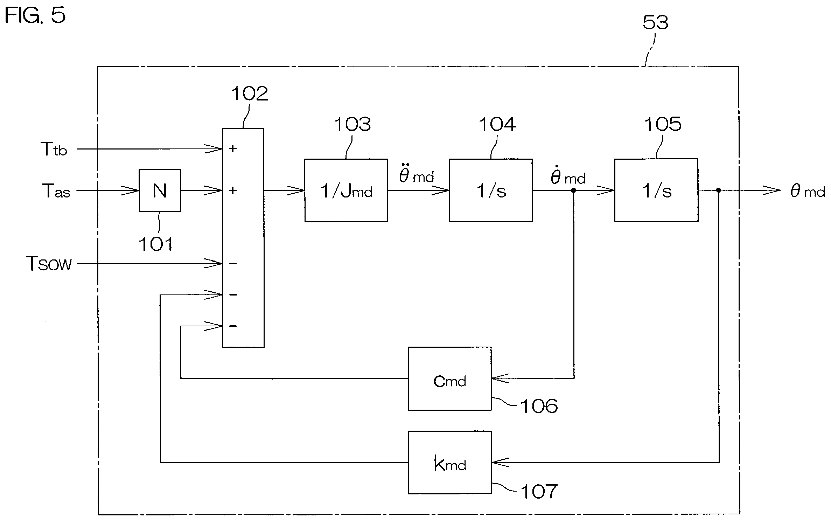

FIG. 5 is a block diagram showing the configuration of the manual steering command value calculation unit 53.

In FIG. 5, J_{md} is the column inertia. s is a differential operator. θ_{md} is the manual steering command value, and corresponds to the rotational angle θ_{col} of the lower column in the comparative method. c_{md} is the viscous damping coefficient of the virtual damper, which is determined through experiments, analyses, etc. in advance. k_{md} is the spring constant of the virtual spring, which is determined through experiments, analyses, etc. in advance.

The manual steering command value calculation unit 53 includes a reduction ratio multiplication unit 101, an addition/subtraction unit 102, an inertia division unit 103, a first integration unit 104, a second integration unit 105, a virtual damper reaction force calculation unit 106, and a virtual spring reaction force calculation unit 107.

The reduction ratio multiplication unit 101 converts the assist torque command value Tₐₛ for a rotary shaft of the electric motor 18 into an assist torque command value N·Tₐₛ for the output shaft 9 by multiplying the assist torque command value Tₐₛ by the reduction ratio N. The assist torque command value N·Tₐₛ for the output shaft 9 calculated by the reduction ratio multiplication unit 101 is provided to the addition/subtraction unit 102.

The torsion bar torque T_{tb}, the assist torque command value N·Tₐₛ for the output shaft 9 calculated by the reduction ratio multiplication unit 101, the warning torque T_{SOW}, a virtual damper reaction force c_{md}·dθ_{md}/dt provided from the virtual damper reaction force calculation unit 106, and a virtual spring reaction force k_{md}·θ_{md} provided from the virtual spring reaction force calculation unit 107 are input to the addition/subtraction unit 102.

The addition/subtraction unit 102 adds the assist torque command value N·Tₐₛ for the output shaft 9 to the torsion bar torque T_{tb}, and subtracts the warning torque T_{SOW}, the virtual damper reaction force c_{md}·dθ_{md}/dt, and the virtual spring reaction force k_{md}·θ_{md} from the addition result. Therefore, the addition/subtraction unit 102 calculates a moment of inertia J_{md}·d²θ_{md}/dt² (= T_{tb} + N·Tₐₛ - c_{md}·dθ_{md}/dt - k_{md}·θ_{md} - T_{SOW}) that corresponds to J_{md}·d²θ_{col}/dt² on the left side of the above expression (2).

The inertia division unit 103 calculates a second derivative d²θ_{md}/dt² of the manual steering command value θ_{md} by dividing the moment of inertia J_{md}·d²θ_{md}/dt² calculated by the addition/subtraction unit 102 by the column inertia J_{md}.

The first integration unit 104 calculates a first derivative dθ_{md}/dt of the manual steering command value θ_{md} by integrating the second derivative d²θ_{md}/dt² of the manual steering command value θ_{md}.

The second integration unit 105 calculates the manual steering command value θ_{md} by integrating the first derivative dθ_{md}/dt of the manual steering command value θ_{md}. The manual steering command value θ_{md} is output from the manual steering command value calculation unit 53.

The virtual damper reaction force calculation unit 106 calculates the virtual damper reaction force c_{md}·dθ_{md}/dt by multiplying the first derivative dθ_{md}/dt of the manual steering command value θ_{md} calculated by the first integration unit 104 by the viscous damping coefficient c_{md}. The virtual damper reaction force c_{md}·dθ_{md}/dt is fed back to the addition/subtraction unit 102.

The virtual spring reaction force calculation unit 107 calculates the virtual spring reaction force k_{md}·θ_{md} by multiplying the manual steering command value θ_{md} calculated by the second integration unit 105 by the spring constant k_{md}. The virtual spring reaction force k_{md}·θ_{md} is fed back to the addition/subtraction unit 102.

That is, the manual steering command value calculation unit 53 calculates the manual steering command value θ_{md} based on an equation of motion given by the following expression (3).
[Math. 3] ${J}_{md} ⋅ {{θ}^{¨}}_{md} = {T}_{tb} + N ⋅ {T}_{as} - {c}_{md} ⋅ {\dot{θ}}_{md} - {k}_{md} ⋅ {θ}_{md} - {T}_{SOW}$ (3)

In the expression (3), J_{md}·d²θ_{md}/dt² is the moment of inertia. N·Tₐₛ is the assist torque command value for the output shaft 9. c_{md}·dθ_{md}/dt is the virtual damper reaction force. k_{md}·θ_{md} is the virtual spring reaction force. T_{SOW} is the warning torque T_{SOW}.

In the present embodiment, the manual steering command value calculation unit 53 calculates the manual steering command value θ_{md} based on the equation of motion in which "-T_{SOW}" is added to the right side of the equation of motion given by the above expression (2). Therefore, the warning torque T_{SOW} acts as a steering reaction force to suppress steering (driver operation) in a direction in which the side of the vehicle may collide with a side obstacle. Thus, the collision of the side of the vehicle with the side obstacle is suppressed. This point will be described in detail later.

In the present embodiment, the assist torque command value N·Tₐₛ for the output shaft 9 is provided to the addition/subtraction unit 102, but the assist torque command value N·Tₐₛ for the output shaft 9 need not be provided to the addition/subtraction unit 102. In this case, the addition/subtraction unit 102 subtracts the warning torque T_{SOW}, the virtual damper reaction force c_{md}·dθ_{md}/dt, and the virtual spring reaction force k_{md}·θ_{md} from the torsion bar torque T_{tb}. In this case, the manual steering command value calculation unit 53 calculates the manual steering command value θ_{md} based on the equation of motion in which "N·Tₐₛ" is removed from the right side of the above expression (3).

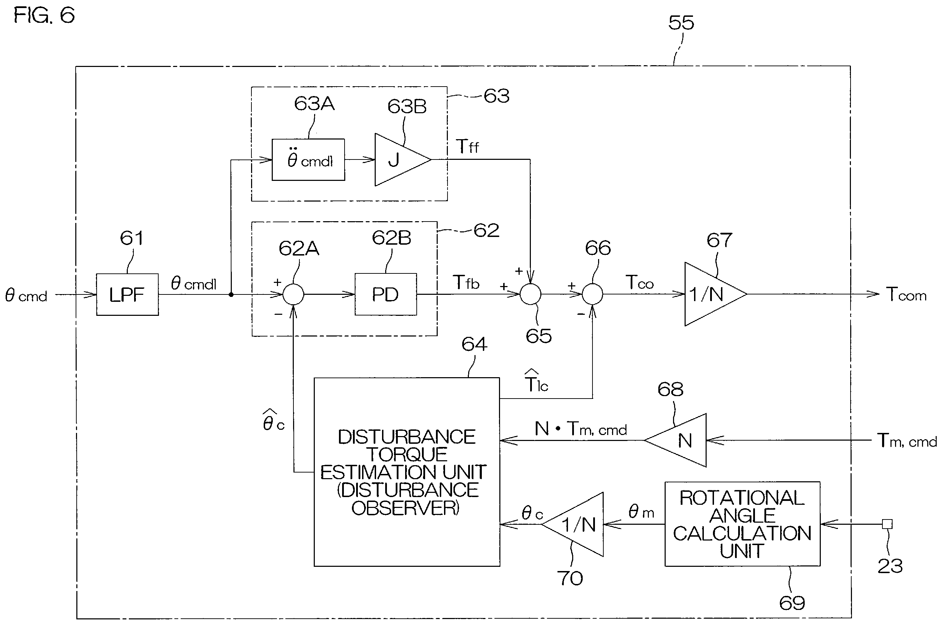

FIG. 6 is a block diagram showing the configuration of the angle control unit 55.

The angle control unit 55 calculates the integrated motor torque command value T_{com} based on the integrated angle command value θ_{cmd}. The angle control unit 55 includes a low-pass filter (LPF) 61, a feedback control unit 62, a feedforward control unit 63, a disturbance torque estimation unit 64, a torque addition unit 65, a disturbance torque compensation unit 66, a first reduction ratio division unit 67, a reduction ratio multiplication unit 68, a rotational angle calculation unit 69, and a second reduction ratio division unit 70.

The reduction ratio multiplication unit 68 converts the motor torque command value T_{m,cmd} calculated by the addition unit 58 (see FIG. 2) into an output shaft torque command value N·T_{m,cmd} that acts on the output shaft 9 (worm wheel 21) by multiplying the motor torque command value T_{m,cmd} by the reduction ratio N of the speed reducer 19.

The rotational angle calculation unit 69 calculates a rotor rotational angle θₘ of the electric motor 18 based on an output signal from the rotational angle sensor 23. The second reduction ratio division unit 70 converts the rotor rotational angle θₘ calculated by the rotational angle calculation unit 69 into a rotational angle (actual steering angle) θ_{c} of the output shaft 9 by dividing the rotor rotational angle θₘ by the reduction ratio N.

The low-pass filter 61 performs a low-pass filtering process on the integrated angle command value θ_{cmd}. An integrated angle command value θ_{cmdl} after the low-pass filtering process is provided to the feedback control unit 62 and the feedforward control unit 63. The low-pass filter 61 may be omitted.

The feedback control unit 62 is provided to bring an estimated steering angle value ^θ_{c} calculated by the disturbance torque estimation unit 64 closer to the integrated angle command value θ_{cmdl} after the low-pass filtering process. The feedback control unit 62 includes an angle deviation calculation unit 62A and a PD control unit 62B. The angle deviation calculation unit 62A calculates a deviation Δθ (= θ_{cmdl} - ^θ_{c}) between the integrated angle command value θ_{cmdl} and the estimated steering angle value ^θ_{c}. The angle deviation calculation unit 62A may calculate, as the angle deviation Δθ, a deviation (θ_{cmdl} - θ_{c}) between the integrated angle command value θ_{cmdl} and the actual steering angle θ_{c} calculated by the second reduction ratio division unit 70.

The PD control unit 62B calculates feedback control torque T_{fb} by performing PD calculation (proportional-derivative calculation) for the angle deviation Δθ calculated by the angle deviation calculation unit 62A. The feedback control torque T_{fb} is provided to the torque addition unit 65.

The feedforward control unit 63 is provided to improve control response by compensating for a delay in response due to the inertia of the electric power steering system 1. The feedforward control unit 63 includes an angular acceleration calculation unit 63A and an inertia multiplication unit 63B. The angular acceleration calculation unit 63A calculates a target angular acceleration d²θ_{cmdl}/dt² by obtaining the second derivative of the integrated angle command value θ_{cmdl}.

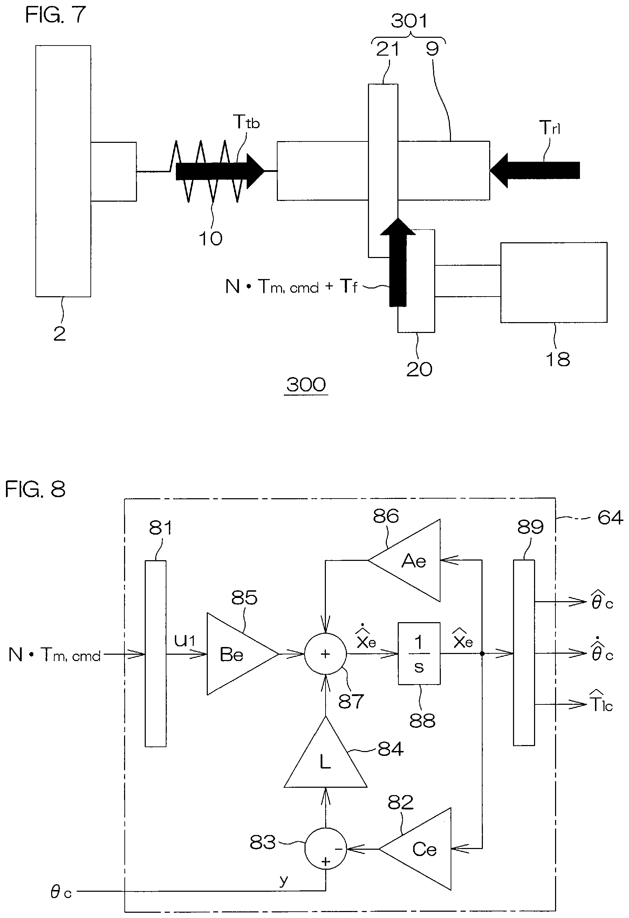

The inertia multiplication unit 63B calculates feedforward control torque T_{ff} (= J·d²θ_{cmdl}/dt²) by multiplying the target angular acceleration d²θ_{cmdl}/dt² calculated by the angular acceleration calculation unit 63A by inertia J of the electric power steering system 1. The inertia J is obtained from, for example, a physical model of the electric power steering system 1 (see FIG. 7) described later. The feedforward control torque T_{ff} is provided to the torque addition unit 65 as an inertia compensation value.

The torque addition unit 65 calculates a basic torque command value (T_{fb} + T_{ff}) by adding the feedforward control torque T_{ff} to the feedback control torque T_{fb}.

The disturbance torque estimation unit 64 is provided to estimate non-linear torque (disturbance torque: torque other than the motor torque) that is generated as disturbance in a plant (controlled object of the electric motor 18). The disturbance torque estimation unit 64 estimates the disturbance torque (disturbance load) T_{lc}, the steering angle θ, and a steering angle derivative (angular velocity) dθ_{c}/dt based on the output shaft torque command value N·T_{m,cmd} and the actual steering angle θ_{c}. The estimated values of the disturbance torque T_{lc}, the steering angle θ_{c}, and the steering angle derivative (angular velocity) dθ_{c}/dt are represented by ^T_{lc}, ^θ_{c}, and d^θ_{c}/dt, respectively. The disturbance torque estimation unit 64 will be described in detail later.

The estimated disturbance torque value ^T_{lc} calculated by the disturbance torque estimation unit 64 is provided to the disturbance torque compensation unit 66 as a disturbance torque compensation value. The estimated steering angle value ^θ_{c} calculated by the disturbance torque estimation unit 64 is provided to the angle deviation calculation unit 62A.

The disturbance torque compensation unit 66 calculates an integrated torque command value T_{co} (= T_{fb} + T_{ff} - ^T_{lc}) by subtracting the estimated disturbance torque value ^T_{lc} from the basic torque command value (T_{fb} + T_{fr}). The integrated torque command value T_{co} (torque command value for the output shaft 9) with the disturbance torque compensated for is thus obtained.

The integrated torque command value T_{co} is provided to the first reduction ratio division unit 67. The first reduction ratio division unit 67 calculates the integrated motor torque command value T_{com} (torque command value for the electric motor 18) by dividing the integrated torque command value T_{co} by the reduction ratio N. The integrated motor torque command value T_{com} is provided to the second switch 57 (see FIG. 2).

The disturbance torque estimation unit 64 will be described in detail. The disturbance torque estimation unit 64 is a disturbance observer that estimates the disturbance torque T_{lc}, the steering angle θ_{c}, and the angular velocity dθ_{c}/dt using, for example, a physical model 300 of the electric power steering system 1 shown in FIG. 7.

The physical model 300 includes a plant (example of an object to be driven by the motor) 301 that includes the output shaft 9 and the worm wheel 21 fixed to the output shaft 9. The torsion bar torque T_{tb} is applied from the steering wheel 2 to the plant 301 via the torsion bar 10, and the road reaction torque Tᵣₗ is applied from the steered wheel 3 side to the plant 301.

Moreover, the output shaft torque command value N·T_{m,cmd} is applied to the plant 301 via the worm gear 20, and the friction torque T_{f} is applied to the plant 301 due to the friction between the worm wheel 21 and the worm gear 20.

An equation of motion for the inertia of the physical model 300 is given by the following expression (4), where J is the inertia of the plant 301.
[Math. 4] $\begin{matrix}J {{θ}^{¨}}_{c} = N ⋅ {T}_{m , cmd} + {T}_{lc} \\ {T}_{lc} = {T}_{tb} + {T}_{rl} + {T}_{f}\end{matrix}$ (4)
d²θ_{c}/dt² is the angular acceleration of the plant 301. N is the reduction ratio of the speed reducer 19. T_{lc} represents the disturbance torque other than the motor torque that is applied to the plant 301. While the disturbance torque T_{lc} is shown as the sum of the torsion bar torque T_{tb}, the road reaction torque Tᵣₗ, and the friction torque T_{f} in the present embodiment, the disturbance torque T_{lc} actually includes torque other than these.

An equation of state for the physical model 300 in FIG. 7 is given by the following expression (5).
[Math. 5] $\left\{\begin{matrix}\dot{x} = Ax + B 1 u 1 + B 2 u 2 \\ y = Cx + Du 1\end{matrix}\right.$ (5)

In the above expression (5), x is a state variable vector, u₁ is a known input vector, u₂ is an unknown input vector, and y is an output vector (measured value). In the above expression (5), A is a system matrix, B₁ is a first input matrix, B₂ is a second input matrix, C is an output matrix, and D is a direct feedthrough matrix.

The above equation of state is extended to a system including the unknown input vector u₂ as one of the states. An equation of state of the extended system (extended equation of state) is given by the following expression (6).
[Math. 6] $\left\{\begin{matrix}{\dot{x}}_{e} = {A}_{e} {x}_{e} + {B}_{e} u 1 \\ y = {C}_{e} {x}_{e}\end{matrix}\right.$ (6)

In the above expression (6), xₑ is a state variable vector of the extended system, and is given by the following expression (7).
[Math. 7] ${x}_{e} = \left[\begin{matrix}x \\ u 2\end{matrix}\right]$ (7)

In the above expression (6), Aₑ is a system matrix of the extended system, Bₑ is a known input matrix of the extended system, and Cₑ is an output matrix of the extended system.

A disturbance observer (extended state observer) given by the equation of the following expression (8) is constructed from the extended equation of state given by the above expression (6).
[Math. 8] $\left\{\begin{matrix}{\dot{\hat{x}}}_{e} = {A}_{e} {\hat{x}}_{e} + {B}_{e} {u}_{1} + L \left(y-\hat{y}\right) \\ \hat{y} = {C}_{e} {\hat{x}}_{e}\end{matrix}\right.$ (8)

In the expression (8), ^xₑ represents an estimated value of xₑ. L is an observer gain. ^y represents an estimated value of y. ^xₑ is given by the following expression (9).
[Math. 9] ${\hat{x}}_{e} = \left[\begin{matrix}{\hat{θ}}_{c} \\ {\dot{\hat{θ}}}_{c} \\ {\hat{T}}_{lc}\end{matrix}\right]$ (9)

In the expression (9), ^θ_{c} is an estimated value of θ_{c}, and ^T_{lc} is an estimated value of T_{lc},

The disturbance torque estimation unit 64 calculates the state variable vector ^xₑ based on the equation of the above expression (8).

FIG. 8 is a block diagram showing the configuration of the disturbance torque estimation unit 64.

The disturbance torque estimation unit 64 includes an input vector input unit 81, an output matrix multiplication unit 82, a first addition unit 83, a gain multiplication unit 84, an input matrix multiplication unit 85, a system matrix multiplication unit 86, a second addition unit 87, an integration unit 88, and a state variable vector output unit 89.

The output shaft torque command value N·T_{m,cmd} calculated by the reduction ratio multiplication unit 68 (see FIG. 6) is provided to the input vector input unit 81. The input vector input unit 81 outputs the input vector u₁.

The output of the integration unit 88 is the state variable vector ^xₑ (see the above expression (9)). At the start of the calculation, an initial value is given as the state variable vector ^xₑ. The initial value of the state variable vector ^xₑ is, for example, 0.

The system matrix multiplication unit 86 multiplies the state variable vector ^xₑ by the system matrix Aₑ. The output matrix multiplication unit 82 multiplies the state variable vector ^xₑ by the output matrix Cₑ.

The first addition unit 83 subtracts the output (Cₑ·^xₑ) of the output matrix multiplication unit 82 from the output vector (measured value) y that is the actual steering angle θ_{c} calculated by the second reduction ratio division unit 70 (see FIG. 6). That is, the first addition unit 83 calculates the difference (y - ^y) between the output vector y and the estimated output vector value ^y (= Cₑ·^xₑ). The gain multiplication unit 84 multiplies the output (y - ^y) of the first addition unit 83 by the observer gain L (see the above expression (8)).

The input matrix multiplication unit 85 multiplies the input vector u₁ output from the input vector input unit 81 by the input matrix Bₑ. The second addition unit 87 calculates a derivative d^xₑ/dt of the state variable vector by adding the output (Bₑ·u₁) of the input matrix multiplication unit 85, the output (Aₑ·^xₑ) of the system matrix multiplication unit 86, and the output (L(y - ^y)) of the gain multiplication unit 84. The integration unit 88 calculates the state variable vector ^xₑ by integrating the output (d^xₑ/dt) of the second addition unit 87. The state variable vector output unit 89 calculates the estimated disturbance torque value ^T_{lc}, the estimated steering angle value ^θ_{c}, and the estimated angular velocity value d^θ_{c}/dt based on the state variable vector ^xₑ.

Unlike the extended state observer described above, a typical disturbance observer is composed of an inverse model of the plant and a low-pass filter. An equation of motion of the plant is given by the expression (3) as described above. The inverse model of the plant is therefore given by the following expression (10).
[Math. 10] ${T}_{lc} = J {{θ}^{¨}}_{c} - N ⋅ {T}_{m , cmd}$ (10)

The inputs to the typical disturbance observer are J·d²θ_{c}/dt² and N·T_{m,cmd}. Since the second derivative of the actual steering angle θ_{c} is used, noise of the rotational angle sensor 23 has a great influence. The extended state observer according to the above embodiment estimates the disturbance torque using an integral type. Therefore, the influence of noise due to differentiation can be reduced.

The typical disturbance observer composed of the inverse model of the plant and the low-pass filter may be used as the disturbance torque estimation unit 64.

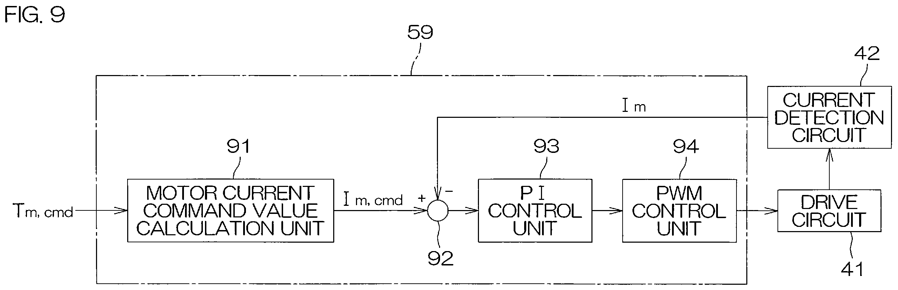

FIG. 9 is a schematic diagram showing the configuration of the torque control unit 59.

The torque control unit 59 (see FIG. 2) includes a motor current command value calculation unit 91, a current deviation calculation unit 92, a PI control unit 93, and a PWM (Pulse Width Modulation) control unit 94.

The motor current command value calculation unit 91 calculates a motor current command value I_{m,cmd} by dividing the motor torque command value T_{m,cmd} calculated by the addition unit 58 (see FIG. 2) by a torque constant Kₜ of the electric motor 18.

The current deviation calculation unit 92 calculates a deviation ΔI (= I_{m,cmd} - Iₘ) between the motor current command value I_{m,cmd} obtained by the motor current command value calculation unit 91 and the motor current Iₘ detected by the current detection circuit 42.

The PI control unit 93 generates a drive command value for controlling the motor current I flowing through the electric motor 18 to the motor current command value I_{m,cmd} by performing PI calculation (proportional-integral calculation) for the current deviation ΔI calculated by the current deviation calculation unit 92. The PWM control unit 94 generates a PWM control signal with a duty cycle corresponding to the drive command value, and supplies the PWM control signal to the drive circuit 41. Electric power corresponding to the drive command value is thus supplied to the electric motor 18.

Next, the warning torque calculation unit 52 will be described. Referring to FIG. 2, the warning torque calculation unit 52 includes a warning determination unit 52A and a warning torque calculation unit 52B.

The warning determination unit 52A determines, using detection information on a side obstacle, whether to apply warning torque for suppressing a collision of the vehicle with the side obstacle. In the present embodiment, the warning determination unit 52A determines whether to apply the warning torque based on the side obstacle position coordinates X_{obs},Y_{obs}, the actual steering angle θ_{c}, the shift position information P_{shift}, and the vehicle speed V. The side obstacle position coordinates X_{obs},Y_{obs} are an example of "detection information on obstacle on side of vehicle" according to the present disclosure.

When the warning determination unit determines to apply the warning torque, the warning torque calculation unit 52B calculates the warning torque T_{SOW} based on the steering angle of the vehicle (actual steering angle θ_{c}). The method for calculating the warning torque T_{SOW} will be described in detail later.

The warning torque calculation unit 52 performs a side obstacle warning torque calculation process in the cooperative steering mode. The warning torque calculation unit 52 may perform the side obstacle warning torque calculation process even in the manual steering mode.

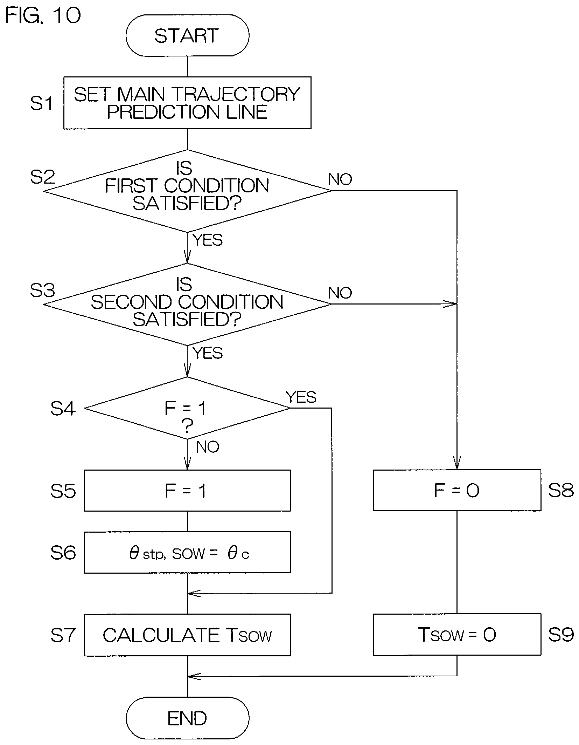

FIG. 10 is a flowchart showing the procedure of the side obstacle warning torque calculation process that is performed by the warning torque calculation unit 52. The process in FIG. 10 is repeatedly performed at every predetermined calculation cycle.

The warning torque calculation unit 52 sets a main trajectory prediction line for collision determination (step S1). In the present embodiment, the warning torque calculation unit 52 sets the main trajectory prediction line for collision determination by predicting the trajectory of the vehicle using the actual steering angle θ_{c}, the shift position information P_{shift}, and the vehicle speed V.

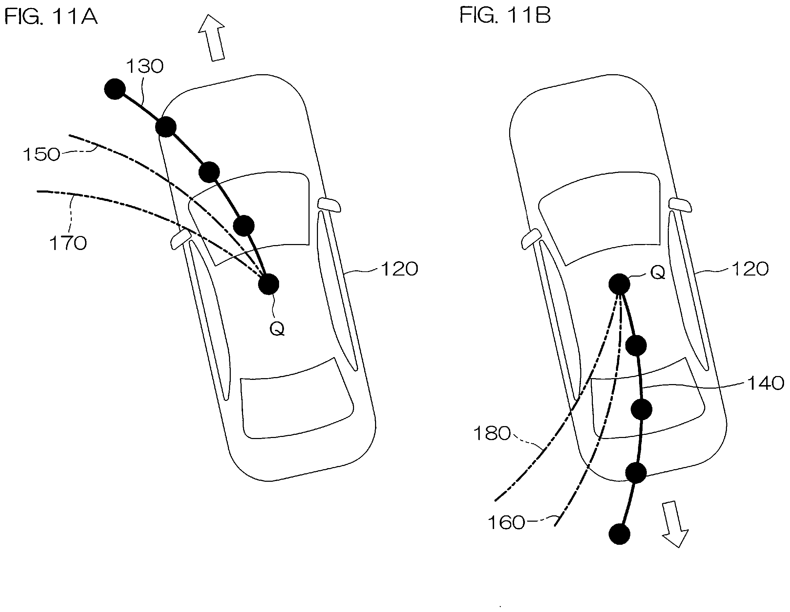

Specifically, when the vehicle is moving forward, the warning torque calculation unit 52 generates a trajectory prediction line 130 of a reference position Q of a vehicle 120 by calculating predicted position coordinates of the reference position Q of the vehicle 120 at constant time intervals using the actual steering angle θ_{c}, the shift position information P_{shift}, and the vehicle speed V as shown in, for example, FIG. 11A. Then, the warning torque calculation unit 52 sets the obtained trajectory prediction line 130 as a main trajectory prediction line 130.

When the vehicle is moving backward, the warning torque calculation unit 52 generates a trajectory prediction line 140 of the reference position Q of the vehicle 120 by calculating predicted position coordinates of the reference position Q of the vehicle 120 at constant time intervals using the actual steering angle θ_{c}, the shift position information P_{shift}, and the vehicle speed V as shown in, for example, FIG. 11B. Then, the warning torque calculation unit 52 sets the obtained trajectory prediction line 140 as a main trajectory prediction line 140.

Next, the warning torque calculation unit 52 determines, based on the main trajectory prediction line 130 (140) and the side obstacle position coordinates X_{obs},Y_{obs}, whether a first condition that there is a high possibility of colliding with a side obstacle is satisfied (step S2).

Specifically, the warning torque calculation unit 52 first sets a collision determination region E based on the main trajectory prediction line 130 (140). The warning torque calculation unit 52 then determines whether at least part of the side obstacle is present within the collision determination region E, thereby determining whether the first condition that there is a high possibility of colliding with the side obstacle is satisfied.

As described above, in the present embodiment, the side obstacle position coordinates X_{obs},Y_{obs} include coordinates X_{obs},Y_{obs} of a plurality of points on the contour of the side obstacle in a plan view (contour coordinates). The plurality of contour coordinates X_{obs},Y_{obs} may be coordinates of a plurality of points spaced away from each other by a predetermined distance on the contour of the side obstacle. The predetermined distance is preferably set to a predetermined value of 5 cm or less. The warning torque calculation unit 52 determines that at least part of the side obstacle is present within the collision determination region E when at least one set of the plurality of contour coordinates X_{obs},Y_{obs} is included in the collision determination region E, and determines that the side obstacle is not present within the collision determination region E when none of the plurality of contour coordinates X_{obs},Y_{obs} are included in the collision determination region E. The same applies hereinafter.

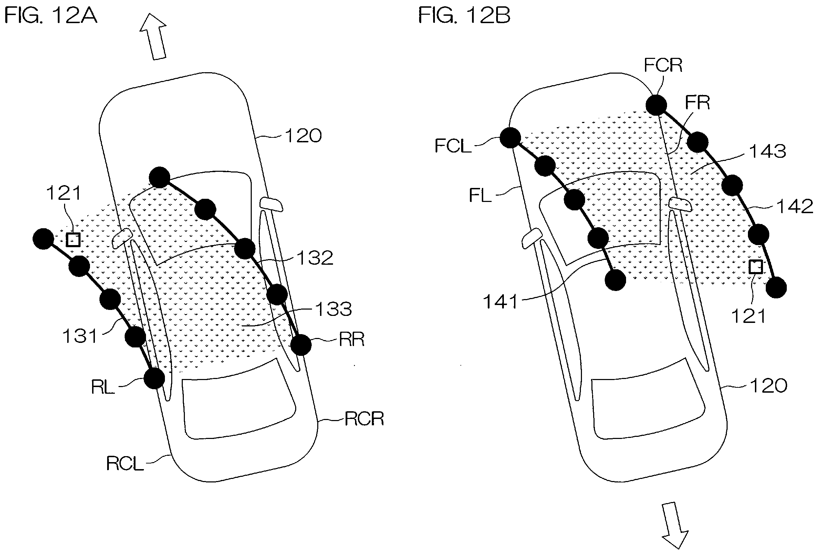

More specifically, when the vehicle 120 is moving forward, the warning torque calculation unit 52 generates trajectory prediction lines (hereinafter referred to as "auxiliary trajectory prediction lines 131, 132") of left and right rear wheel positions RL, RR on a vehicle body based on the main trajectory prediction line 130 as shown in, for example, FIG. 12A. The auxiliary trajectory prediction lines 131, 132 include a left auxiliary trajectory prediction line 131 that is a trajectory prediction line of the left rear wheel position RL, and a right auxiliary trajectory prediction line 132 that is a trajectory prediction line of the right rear wheel position RR.

Specifically, the warning torque calculation unit 52 determines, for example, predicted vehicle positions and vehicle postures at predetermined time intervals based on the main trajectory prediction line 130. The warning torque calculation unit 52 generates the left auxiliary trajectory prediction line 131 by connecting the left rear wheel positions RL at the predetermined time intervals. The warning torque calculation unit 52 also generates the right auxiliary trajectory prediction line 132 by connecting the right rear wheel positions RR at the predetermined time intervals.

Next, the warning torque calculation unit 52 sets a region sandwiched by the two auxiliary trajectory prediction lines 131, 132 (region 133 indicated by dotted hatching in FIG. 12A) as the collision determination region E. The warning torque calculation unit 52 then determines whether at least part of the side obstacle is present within the collision determination region E. In FIG. 12A, reference sign 121 represents the side obstacle.

Instead of generating the trajectory prediction lines of the left and right rear wheel positions RL, RR on the vehicle body as the auxiliary trajectory prediction lines 131, 132, the warning torque calculation unit 52 may generate trajectory prediction lines (not shown) of left and right corners RCL, RCR (see FIG. 12A) at the rear of the vehicle body as the auxiliary trajectory prediction lines 131, 132. In this case, the auxiliary trajectory prediction lines 131, 132 include a left auxiliary trajectory prediction line 131 that is a trajectory prediction line of the left corner RCL at the rear of the vehicle body, and a right auxiliary trajectory prediction line 132 that is a trajectory prediction line of the right corner RCR at the rear of the vehicle body.

The warning torque calculation unit 52 determines that the first condition is satisfied when at least part of the side obstacle is present within the collision determination region E, and determines that the first condition is not satisfied when the side obstacle is not present within the collision determination region E.

When the vehicle 120 is moving forward and the steering direction is a leftward steering direction, the warning torque calculation unit 52 may set the collision determination region E as follows. That is, the warning torque calculation unit 52 generates the left auxiliary trajectory prediction line 131 (see FIG. 12A) that is the trajectory prediction line 131 of the left rear wheel position RL on the vehicle body based on the main trajectory prediction line 130. Then, the warning torque calculation unit 52 sets a region sandwiched by the main trajectory prediction line 130 and the left auxiliary trajectory prediction line 131 as the collision determination region E.

When the vehicle 120 is moving forward and the steering direction is a rightward steering direction, the warning torque calculation unit 52 may set the collision determination region E as follows. That is, the warning torque calculation unit 52 generates the right auxiliary trajectory prediction line 132 (see FIG. 12A) that is the trajectory prediction line 132 of the right rear wheel position RR on the vehicle body based on the main trajectory prediction line 130. Then, the warning torque calculation unit 52 sets a region sandwiched by the main trajectory prediction line 130 and the right auxiliary trajectory prediction line 132 as the collision determination region E.

When the vehicle 120 is moving backward, the warning torque calculation unit 52 generates trajectory prediction lines (hereinafter referred to as "auxiliary trajectory prediction lines 141, 142") of left and right corners FCL, FCR at the front of the vehicle body based on the main trajectory prediction line 140 as shown in, for example, FIG. 12B. The auxiliary trajectory prediction lines 141, 142 include a left auxiliary trajectory prediction line 141 that is a trajectory prediction line of the left corner FCL at the front of the vehicle body, and a right auxiliary trajectory prediction line 142 that is a trajectory prediction line of the right corner FCR at the front of the vehicle body.

Specifically, the warning torque calculation unit 52 determines, for example, predicted vehicle positions and vehicle postures at predetermined time intervals based on the main trajectory prediction line 140. The warning torque calculation unit 52 generates the left auxiliary trajectory prediction line 141 by connecting the positions of the left corner FCL at the front of the vehicle body at the predetermined time intervals. The warning torque calculation unit 52 generates the right auxiliary trajectory prediction line 142 by connecting the positions of the right corner FCR at the front of the vehicle body at the predetermined time intervals.

Next, the warning torque calculation unit 52 sets a region sandwiched by the two auxiliary trajectory prediction lines 141, 142 (region 143 indicated by dotted hatching in FIG. 12B) as the collision determination region E. The warning torque calculation unit 52 then determines whether at least part of the side obstacle coordinates are present within the collision determination region E. In FIG. 12B, reference sign 121 represents the side obstacle.

Instead of generating the trajectory prediction lines of the left and right corners FCL, FCR at the front of the vehicle body as the auxiliary trajectory prediction lines 141, 142, the warning torque calculation unit 52 may generate trajectory prediction lines (not shown) of left and right front wheel positions FL, FR (see FIG. 12B) on the vehicle body as the auxiliary trajectory prediction lines 141, 142. In this case, the auxiliary trajectory prediction lines 141, 142 include a left auxiliary trajectory prediction line 141 that is a trajectory prediction line of the left front wheel position FL, and a right auxiliary trajectory prediction line 142 that is a trajectory prediction line of the right front wheel position FR.

The warning torque calculation unit 52 determines that the first condition is satisfied when at least part of the side obstacle is present within the collision determination region E, and determines that the first condition is not satisfied when the side obstacle is not present within the collision determination region E.

When the vehicle 120 is moving backward and the steering direction is a leftward steering direction (rightward steering direction for the backward movement), the warning torque calculation unit 52 may set the collision determination region E as follows. That is, the warning torque calculation unit 52 generates the right auxiliary trajectory prediction line 142 (see FIG. 12B) that is the trajectory prediction line of the right corner FCR at the front of the vehicle body based on the main trajectory prediction line 140. Then, the warning torque calculation unit 52 sets a region sandwiched by the main trajectory prediction line 140 and the right auxiliary trajectory prediction line 142 as the collision determination region E.

When the vehicle 120 is moving backward and the steering direction is a rightward steering direction (leftward steering direction for the backward movement), the warning torque calculation unit 52 may set the collision determination region E as follows. That is, the warning torque calculation unit 52 generates the left auxiliary trajectory prediction line 141 (see FIG. 12B) that is the trajectory prediction line of the left corner FCL at the front of the vehicle body based on the main trajectory prediction line 140. Then, the warning torque calculation unit 52 sets a region sandwiched by the main trajectory prediction line 140 and the left auxiliary trajectory prediction line 141 as the collision determination region E.

When determination is made in step S2 that the first condition is satisfied (step S2: YES), the warning torque calculation unit 52 proceeds to step S3.

In step S3, the warning torque calculation unit 52 determines whether a second condition that the vehicle speed V is equal to or smaller than a predetermined first threshold value, the absolute value of the torsion bar torque T_{tb} is equal to or larger than a predetermined second threshold value, and the shift position is other than Parking is satisfied. The first threshold value may be set to a predetermined value of, for example, 8 km/h or more and 12 km/h or less. The second threshold value may be set to a predetermined value of, for example, 0.3 Nm or more and 0.7 Nm or less. The reason why the second condition includes the vehicle speed condition and the torsion bar torque condition will be described later.

When the second condition is satisfied (step S3: YES), the warning torque calculation unit 52 determines whether a warning torque application flag F is set (step S4). The warning torque application flag F is a flag that stores information indicating whether to apply the warning torque. The warning torque application flag F is set (F = 1) when the warning torque should be applied, and is reset (F = 0) when the warning torque should not be applied. The initial value of the warning torque application flag F is 0.

When the warning torque application flag F is reset (F = 0) (step S4: NO), the warning torque calculation unit 52 sets the warning torque application flag F (F = 1) (step S5) and then proceeds to step S6.

In step S6, the warning torque calculation unit 52 stores the actual steering angle θ_{c} when the warning torque application flag F is set as an actual steering angle θ_{stp,SOW} immediately before the application of the warning torque is started. Then, the warning torque calculation unit 52 proceeds to step S7 and calculates the warning torque T_{SOW}.

When determination is made in step S4 that the warning torque application flag F is set (F = 1) (step S4: YES), the warning torque calculation unit 52 proceeds to step S7 without performing the processes of steps S5 and S6.

That is, only when the determination in step S3 is affirmative while the warning torque application flag F is reset, the warning torque application flag F is changed from the reset state to the set state, and the actual steering angle θ_{c} at that time is stored as the actual steering angle θ_{stp,SOW} immediately before the application of the warning torque is started. In other words, the actual steering angle θ_{stp,SOW} immediately before the application of the warning torque is started is updated.

When the determination in step S3 is affirmative while the warning torque application flag F is set, the warning torque application flag F remains set, but the actual steering angle θ_{stp,SOW} immediately before the application of the warning torque is started is not updated.

In step S7, the warning torque calculation unit 52 calculates the warning torque T_{SOW} based on the following expression (11). The initial value of the warning torque T_{SOW} is zero.
[Math. 11] $\begin{matrix}\left[When {θ}_{stp , SOW}>0\right] \\ {T}_{SOW} = \left\{\begin{matrix}O & \left({θ}_{c}<{θ}_{stp , SOW}\right) \\ {k}_{SOW} \left({θ}_{c}-{θ}_{stp , SOW}\right) & \left({θ}_{stp , SOW}≦{θ}_{c}\right)\end{matrix}\right. \\ \left[When {θ}_{stp , SOW}=0\right] \\ {T}_{SOW} = O \\ \left[When {θ}_{stp , SOW}<0\right] \\ {T}_{SOW} = \left\{\begin{matrix}O & \left({θ}_{stp , SOW}<{θ}_{c}\right) \\ {k}_{SOW} \left({θ}_{c}-{θ}_{stp , SOW}\right) & \left({θ}_{c}≦{θ}_{stp , SOW}\right)\end{matrix}\right.\end{matrix}$ (11)

In the expression (11), k_{SOW} is a spring constant for calculating the warning torque (provided that k_{SOW} > 0) and is set in advance.

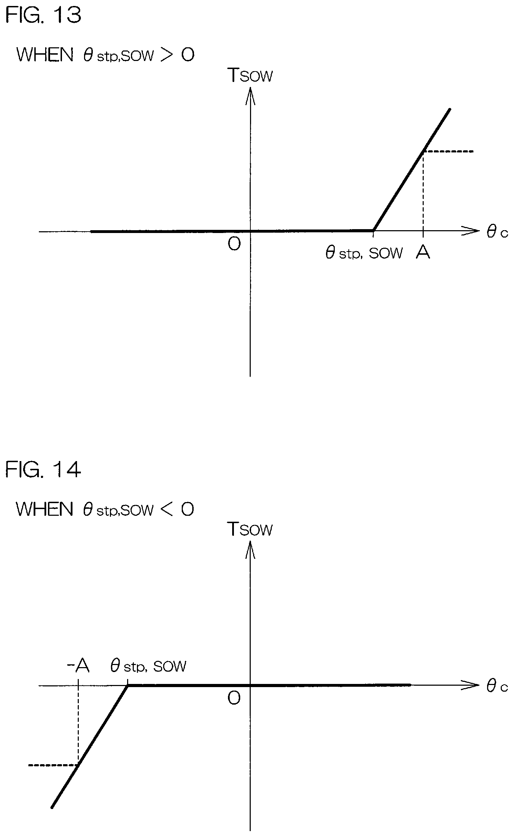

FIG. 13 is a graph showing characteristics of the warning torque T_{SOW} with respect to the actual steering angle θ_{c} when θ_{stp,SOW} > 0 in the expression (11).

When the actual steering angle θ_{c} is smaller than θ_{stp,SOW}, the steering direction is a direction in which the vehicle moves away from the side obstacle. Therefore, the warning torque T_{SOW} is set to zero. When the actual steering angle θ_{c} is equal to or larger than θ_{stp,SOW}, the steering direction is a direction in which the vehicle approaches the side obstacle. Therefore, the warning torque T_{SOW} is set to increase as the actual steering angle θ_{c} increases. When the actual steering angle θ_{c} is equal to or larger than θ_{stp,SOW}, the warning torque T_{SOW} increases linearly in the example of FIG. 13, but may increase non-linearly.

The characteristics of the warning torque T_{SOW} with respect to the actual steering angle θ_{c} may be such that the warning torque T_{SOW} is constant when θ_{c} is equal to or larger than a predetermined value A (provided that A > θ_{stp,SOW}) as indicated by the dashed line in FIG. 13. When the warning torque T_{SOW} rises from zero near θ_{c} = θ_{stp,SOW}, the warning torque T_{SOW} may increase more smoothly.

When the actual steering angle θ_{c} is equal to or larger than θ_{stp,SOW}, the warning torque T_{SOW} may be calculated by the following expression (12).
[Math. 12] ${T}_{SOW} = {k}_{SOW} \left({θ}_{c}-{θ}_{stp , SOW}\right) + {C}_{SOW} ⋅ {\dot{θ}}_{c}$ (12)

In the expression (12), c_{SOW} is a viscous damping coefficient for calculating the warning torque (provided that csow > 0) and is set in advance.

FIG. 14 is a graph showing characteristics of the warning torque T_{SOW} with respect to the actual steering angle θ_{c} when θ_{stp,SOW} < 0 in the expression (11).

When the actual steering angle θ_{c} is larger than θ_{stp,SOW}, the steering direction is a direction in which the vehicle moves away from the side obstacle. Therefore, the warning torque T_{SOW} is set to zero. When the actual steering angle θ_{c} is equal to or smaller than θ_{stp,SOW}, the steering direction is a direction in which the vehicle approaches the side obstacle. Therefore, the warning torque T_{SOW} is set to decrease as the actual steering angle θ_{c} decreases. When the actual steering angle θ_{c} is equal to or smaller than θ_{stp,SOW}, the warning torque T_{SOW} decreases linearly in the example of FIG. 14, but may decrease non-linearly.

The characteristics of the warning torque T_{SOW} with respect to the actual steering angle θ_{c} may be such that the warning torque T_{SOW} is constant when θ_{c} is equal to or smaller than a predetermined value -A as indicated by the dashed line in FIG. 14. When the warning torque T_{SOW} falls from zero near θ_{c} = θ_{stp,SOW}, the warning torque T_{SOW} may decrease more smoothly.

When the actual steering angle θ_{c} is equal to or smaller than θ_{stp,SOW}, the warning torque T_{SOW} may be calculated by the same expression as the above expression (12).

When the process of step S7 is completed, the warning torque calculation unit 52 ends the process in the current calculation cycle.

When determination is made in step S2 that the first condition is not satisfied (step S2: NO), the warning torque calculation unit 52 resets the warning torque application flag F (F = 0) (step S8) and then sets the warning torque T_{SOW} to 0 (step S9). Then, the warning torque calculation unit 52 ends the process in the current calculation cycle.

When determination is made in step S3 that the second condition is not satisfied (step S3: NO), the warning torque calculation unit 52 resets the warning torque application flag F (F = 0) (step S8) and then sets the warning torque T_{SOW} to 0 (step S9). Then, the warning torque calculation unit 52 ends the process in the current calculation cycle.

The processes of steps S1 to S6, S8, and S9 in FIG. 10 are performed by the warning determination unit 52A. Step S7 is a process performed by the warning torque calculation unit 52B.

The reason why the second condition includes the vehicle speed condition and the torsion bar torque condition will be described. The reason for setting the condition that the vehicle speed V is equal to or smaller than the predetermined first threshold value is as follows. It is assumed that the application of the warning torque T_{SOW} is particularly effective in avoiding a collision with a side obstacle when the vehicle enters or leaves a parking space. This condition is set because the vehicle speed is basically low when the vehicle enters or leaves a parking space. The reason for setting the condition that the absolute value of the torsion bar torque T_{tb} is equal to or larger than the predetermined second threshold value is as follows. This condition is set because the application of the warning torque T_{SOW} is assumed to be a safety function to be exerted when the driver is steering.

Next, the operation of the present embodiment will be described.

In the present embodiment, the manual steering mode refers to a steering mode in which the electric motor 18 is controlled based only on the assist torque command value Tₐₛ. The cooperative steering mode refers to a steering mode in which the electric motor 18 is controlled based on the integrated angle command value θ_{cmd} obtained by considering both the automatic steering command value θ_{ad} and the manual steering command value θ_{md}.

When the steering mode is set to the manual steering mode, the first switch 56 is ON and the second switch 57 is OFF. When the steering mode is set to the cooperative steering mode, the first switch 56 is OFF and the second switch 57 is ON. That is, the motor control ECU 202 can switch the steering mode between the manual steering mode and the cooperative steering mode by the driver's operation on the mode switches 31, 32.

The switching of the steering mode is performed by the mode switches 31, 32. However, the higher-level ECU 201 may switch the steering mode according to an ON/OFF signal of a driving assistance function or an autonomous driving function, an obstacle(s), a driver's condition, a driver's operation on an accelerator, a brake, etc., and the travel state of the vehicle. In this case, the higher-level ECU 201 generates a mode setting signal according to the ON/OFF signal of the driving assistance function or the autonomous driving function, the obstacle(s), the driver's condition, the driver's operation on the accelerator, the brake, etc., and the travel state of the vehicle, and provides the mode setting signal to the motor control ECU 202.

In the above embodiment, the steering mode can be switched between the cooperative steering mode in which the electric motor 18 can be controlled based on the integrated angle command value θ_{cmd} and the manual steering mode in which the electric motor 18 can be controlled based only on the assist torque command value Tₐₛ.

That is, in the electric power steering system 1 that can control the electric motor 18 based on the integrated angle command value θ_{cmd}, the electric motor 18 can be controlled based only on the assist torque command value Tₐₛ.

In the above embodiment, in the manual steering mode, the electric motor 18 is controlled based only on the assist torque command value Tₐₛ. Therefore, the driver can receive the actual road reaction torque.

In the above embodiment, in the cooperative steering mode, when determination is made in step S2 of FIG. 10 that the first condition is satisfied and determination is made in step S3 that the second condition is satisfied, the warning torque T_{SOW} is calculated based on the above expression (11). In the cooperative steering mode, the manual steering command value calculation unit 53 calculates the manual steering command value θ_{md} based on the equation of motion in which "-T_{SOW}" is added to the right side of the equation of motion given by the expression (2) (see the expression (3)). Therefore, the warning torque T_{SOW} acts as a steering reaction force to suppress steering (driver operation) in a direction in which the side of the vehicle may collide with a side obstacle. Thus, the collision of the side of the vehicle with the side obstacle can be suppressed.

In the manual mode, the first switch 56 may be turned OFF, the second switch 57 may be turned ON, and the automatic steering command value θ_{ad} may be set to 0. In this case, the warning torque calculation unit 52 and the manual steering command value calculation unit 53 are operated even in the manual mode. In this case, the manual steering mode is a steering mode in which the electric motor 18 is controlled based only on the manual steering command value θ_{md}.

### [Description of First Modification of Side Obstacle Warning Torque Calculation Process]

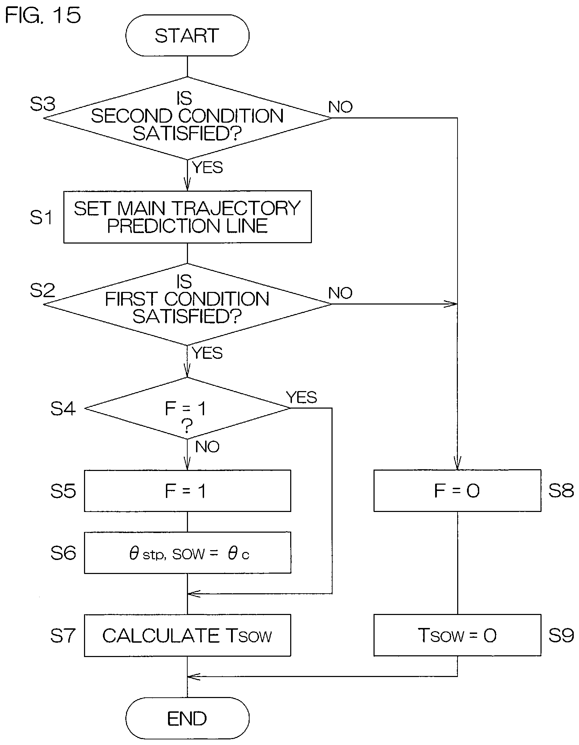

The warning torque calculation unit 52 may perform a side obstacle warning torque calculation process as shown in FIG. 15 instead of the side obstacle warning torque calculation process in FIG. 10. In FIG. 15, steps in which the same processes as those in the steps in FIG. 10 are performed are represented by the same step numbers as those in FIG. 10. The process in FIG. 15 is repeatedly performed at every predetermined calculation cycle.

The warning torque calculation unit 52 first determines whether the second condition is satisfied (step S3). The second condition is the same as the second condition described above.

When the second condition is not satisfied in step S3 (step S3: NO), the warning torque calculation unit 52 proceeds to step S8. After performing the process of step S8, the warning torque calculation unit 52 performs the process of step S9. Then, the warning torque calculation unit 52 ends the process in the current calculation cycle.

When determination is made in step S3 that the second condition is satisfied (step S3: YES), the warning torque calculation unit 52 sets a main trajectory prediction line (step S1) and then proceeds to step S2. When determination is made in step S2 that the first condition is satisfied (step S2: YES), the warning torque calculation unit 52 proceeds to step S4.

When the warning torque application flag F is reset (F = 0) in step S4 (step S4: NO), the warning torque calculation unit 52 proceeds to step S7 after performing the processes of steps S5 and S6.

When determination is made in step S4 that the warning torque application flag F is set (F = 1) (step S4: YES), the warning torque calculation unit 52 proceeds to step S7 without performing the processes of steps S5 and S6.

In step S7, the warning torque calculation unit 52 calculates the warning torque T_{SOW}. Then, the warning torque calculation unit 52 ends the process in the current calculation cycle.

When determination is made in step S2 that the first condition is not satisfied (step S2: NO), the warning torque calculation unit 52 proceeds to step S8.

### [Description of Modification of Main Trajectory Prediction Line]

In the above embodiment, the warning torque calculation unit 52 generates the trajectory prediction line of the reference position Q of the vehicle 120 using the actual steering angle θ_{c}, the shift position information P_{shift}, and the vehicle speed V, and sets the obtained trajectory prediction line as the main trajectory prediction line 130 (see FIG. 11A), 140 (see FIG. 11B).

However, the warning torque calculation unit 52 may set the main trajectory prediction line by predicting the vehicle trajectory using a steering angle having a larger absolute value than the actual steering angle θ_{c}. Specifically, the warning torque calculation unit 52 may generate the trajectory prediction line of the reference position Q of the vehicle 120 by regarding, as the actual steering angle, a first imaginary steering angle G1·θ_{c} that is a value obtained by multiplying the actual steering angle θ_{c} by a first gain G1 larger than 1, and set the obtained trajectory prediction line as the main trajectory prediction line. The main trajectory prediction line that is set using the steering angle having a larger absolute value than the actual steering angle θ_{c}, such as the main trajectory prediction line that is set using the first imaginary steering angle G1·θ_{c}, may be hereinafter referred to as "first main trajectory prediction line." The main trajectory prediction line that is set using the actual steering angle θ_{c} as in the above embodiment may be hereinafter referred to as "basic main trajectory prediction line."

An example of the first main trajectory prediction line when the basic main trajectory prediction line is the curve 130 in FIG. 11A is indicated by a long dashed short dashed line 150 in FIG. 11A. An example of the first main trajectory prediction line when the basic main trajectory prediction line is the curve 140 in FIG. 11B is indicated by a long dashed short dashed line 160 in FIG. 11B.

The collision determination region E is set by the same method as that described in the above embodiment. However, the first main trajectory prediction line is used instead of the basic main trajectory prediction line in the above embodiment. When the collision determination region E is set based on the first main trajectory prediction line, the collision with the side obstacle can be suppressed more reliably than when the collision determination region E is set based on the basic main trajectory prediction line.

When the collision determination region E is set based on the first main trajectory prediction line, the state in which the first condition is satisfied and the state in which the first condition is not satisfied may be repeatedly switched within a short period. In other words, the state in which the warning torque T_{SOW} is applied and the state in which the warning torque T_{SOW} is not applied may be repeatedly switched within a short period.

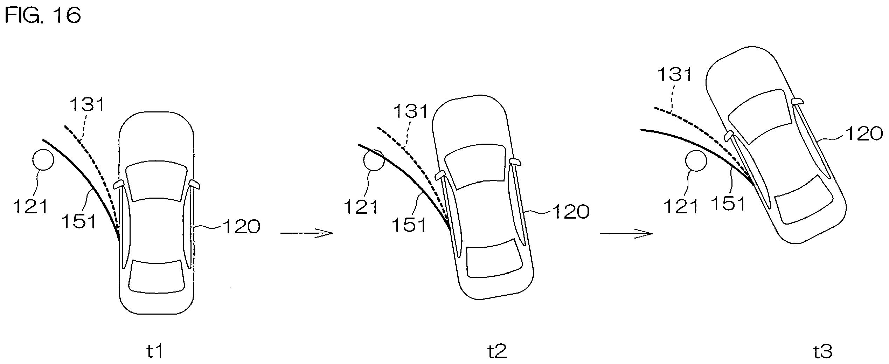

This point will be described with reference to FIG. 16. In the description with reference to FIG. 16, the second condition is satisfied. FIG. 16 shows state changes when the vehicle 120 moves forward while turning left. In FIG. 16, a dashed line 131 indicates the left auxiliary trajectory prediction line generated based on the basic main trajectory prediction line, and a continuous line 151 indicates a left auxiliary trajectory prediction line generated based on the first main trajectory prediction line.

The collision determination region E that is set based on the basic main trajectory prediction line is, for example, a region sandwiched by the left auxiliary trajectory prediction line 131 and the corresponding right auxiliary trajectory prediction line (or basic main trajectory prediction line) (not shown). The collision determination region E that is set based on the first main trajectory prediction line is, for example, a region sandwiched by the left auxiliary trajectory prediction line 151 and the corresponding right auxiliary trajectory prediction line (or first main trajectory prediction line) (not shown).

At time t1, the first condition is not satisfied because the side obstacle 121 is not present within the collision determination region E that is set based on the first main trajectory prediction line. Therefore, the warning torque T_{SOW} is not applied.

At time t2, the first condition is satisfied because the side obstacle 121 is not present within the collision determination region E that is set based on the basic main trajectory prediction line but at least part of the side obstacle 121 is present within the collision determination region E that is set based on the first main trajectory prediction line. Therefore, the warning torque T_{SOW} is applied.

When the vehicle slightly moves after time t2 (time t3), the first condition is not satisfied because the side obstacle 121 is not present within the collision determination region E that is set based on the first main trajectory prediction line. Therefore, the warning torque T_{SOW} is not applied.

When the collision determination region E is set based on the first main trajectory prediction line, such state changes are likely to occur repeatedly. Therefore, the state in which the warning torque T_{SOW} is applied and the state in which the warning torque T_{SOW} is not applied may be repeatedly switched within a short period.

The warning torque calculation unit 52 may set the first main trajectory prediction line as follows. That is, the warning torque calculation unit 52 sets, as a first imaginary steering angle (θ_{c} + sign(θ_{c})*α), a value obtained by adding an offset sign(θ_{c})*α to the actual steering angle θ_{c} such that its absolute value increases. sign(θ_{c}) is 1 when θ_{c} > 0, 0 when θ_{c} = 0, and -1 when θ_{c} < 0. α is a predetermined value (real number) larger than 0. Then, the warning torque calculation unit 52 generates the trajectory prediction line of the reference position Q of the vehicle 120 by regarding the first imaginary steering angle (θ_{c} + sign(θ_{c})*α) as the actual steering angle, and sets the obtained trajectory prediction line as the first main trajectory prediction line.

### [Description of Second Modification of Side Obstacle Warning Torque Calculation Process]

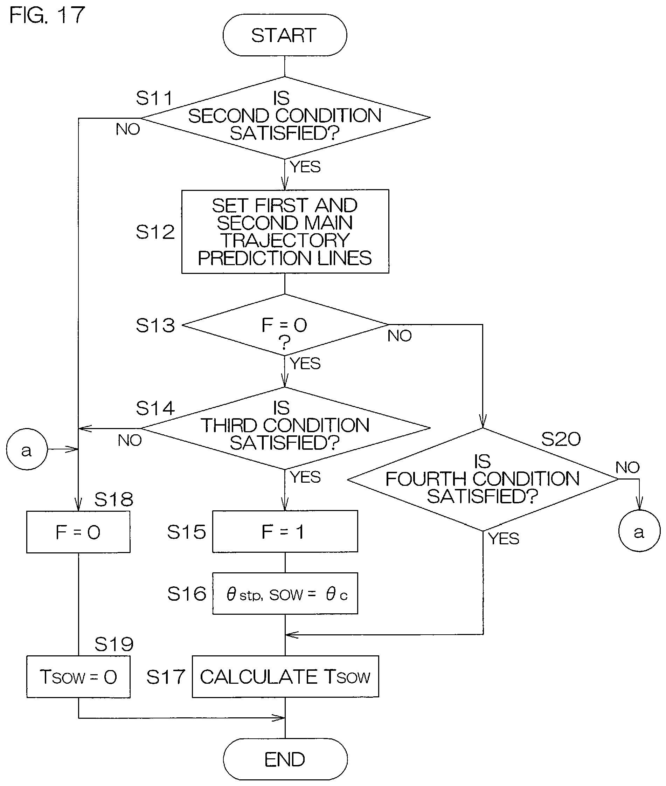

In order to suppress the repeated switching of the state in which the warning torque T_{SOW} is applied and the state in which the warning torque T_{SOW} is not applied within a short period, the warning torque calculation unit 52 may perform a side obstacle warning torque calculation process as shown in FIG. 17. The process in FIG. 17 is repeatedly performed at every predetermined calculation cycle.

The warning torque calculation unit 52 first determines whether the second condition is satisfied (step S11). For example, the warning torque calculation unit 52 determines whether the second condition that the vehicle speed V is equal to or smaller than the predetermined first threshold value, the absolute value of the torsion bar torque T_{tb} is equal to or larger than the predetermined second threshold value, and the shift position is other than Parking is satisfied. The setting ranges of the first threshold value and the second threshold value are as described above.

When the second condition is not satisfied (step S11: NO), the warning torque calculation unit 52 resets the warning torque application flag F (F = 0) (step S18). The initial value of the warning torque application flag F is 0. Then, the warning torque calculation unit 52 sets the warning torque T_{SOW} to 0 (step S19). The initial value of the warning torque T_{SOW} is 0. Then, the warning torque calculation unit 52 ends the process in the current calculation cycle.

When determination is made in step S11 that the second condition is satisfied (step S11: YES), the warning torque calculation unit 52 sets a first main trajectory prediction line and a second main trajectory prediction line (step S12).

Specifically, the warning torque calculation unit 52 generates the trajectory prediction line of the reference position Q of the vehicle by regarding, as the actual steering angle, the first imaginary steering angle G1·θ_{c} that is a value obtained by multiplying the actual steering angle θ_{c} by the first gain G1 larger than 1, and sets the obtained trajectory prediction line as the first main trajectory prediction line. The warning torque calculation unit 52 also generates the trajectory prediction line of the reference position Q of the vehicle by regarding, as the actual steering angle, a second imaginary steering angle G2·θ_{c} that is a value obtained by multiplying the actual steering angle θ_{c} by a second gain G2 larger than the first gain G1, and sets the obtained trajectory prediction line as the second main trajectory prediction line.

Examples of the first main trajectory prediction line and the second main trajectory prediction line when the basic main trajectory prediction line is the curve 130 in FIG. 11A are indicated by the long dashed short dashed line 150 and a long dashed double-short dashed line 170 in FIG. 11A, respectively. Examples of the first main trajectory prediction line and the second main trajectory prediction line when the basic main trajectory prediction line is the curve 140 in FIG. 11B are indicated by the long dashed short dashed line 160 and a long dashed double-short dashed line 180 in FIG. 11B, respectively.

Next, the warning torque calculation unit 52 determines whether the warning torque application flag F is reset (F = 0) (step S13). The initial value of the warning torque application flag F is 0.

When the warning torque application flag F is reset (F = 0) (step S13: YES), the warning torque calculation unit 52 determines, based on the first main trajectory prediction line 150 (160) and the side obstacle position coordinates X_{obs},Y_{obs}, whether a third condition that there is a high possibility of colliding with a side obstacle is satisfied (step S14).

Specifically, the warning torque calculation unit 52 sets the collision determination region E (hereinafter referred to as "first collision determination region E1") based on the first main trajectory prediction line 150 (160). The first collision determination region E1 is set by the same method as that described in the above embodiment. However, the first main trajectory prediction line 150 (160) is used instead of the basic main trajectory prediction line in the above embodiment.

The warning torque calculation unit 52 then determines whether at least part of the side obstacle is present within the first collision determination region E1. The warning torque calculation unit 52 determines that the third condition is satisfied when at least part of the side obstacle is present within the first collision determination region E1, and determines that the third condition is not satisfied when the side obstacle is not present within the first collision determination region E1.

That is, in the present modification, when the warning torque T_{SOW} is not applied (when F = 0), determination is made as to whether there is a high possibility that the vehicle will collide with the side obstacle based on the vehicle trajectory (first prediction result) predicted by regarding the first imaginary steering angle G1·θ_{c} as the actual steering angle.

When determination is made in step S14 that the third condition is satisfied (step S14: YES), the warning torque calculation unit 52 sets the warning torque application flag F (F = 1) (step S15) and then proceeds to step S16.

In step S16, the warning torque calculation unit 52 stores the actual steering angle θ_{c} when the warning torque application flag F is set as the actual steering angle θ_{stp,SOW}, immediately before the application of the warning torque is started. Then, the warning torque calculation unit 52 proceeds to step S17 and calculates the warning torque T_{SOW}. The initial value of the warning torque T_{SOW} is 0. The process of step S17 is the same as the process of step S7 in FIG. 10, and therefore description thereof will be omitted. Then, the warning torque calculation unit 52 ends the process in the current calculation cycle.

When determination is made in step S14 that the third condition is not satisfied (step S14: NO), the warning torque calculation unit 52 proceeds to step S18.

When determination is made in step S13 that the warning torque application flag F is set (F = 1) (step S13: NO), the warning torque calculation unit 52 determines, based on the second main trajectory prediction line 170 (180) and the side obstacle position coordinates X_{obs},Y_{obs}, whether a fourth condition that there is a high possibility of colliding with the side obstacle is satisfied (step S20).

Specifically, the warning torque calculation unit 52 sets the collision determination region E (hereinafter referred to as "second collision determination region E2") based on the second main trajectory prediction line 170 (180). The second collision determination region E2 is set by the same method as that described in the above embodiment. However, the second main trajectory prediction line 170 (180) is used instead of the basic main trajectory prediction line in the above embodiment.

The warning torque calculation unit 52 then determines whether at least part of the side obstacle is present within the second collision determination region E2. The warning torque calculation unit 52 determines that the fourth condition is satisfied when at least part of the side obstacle is present within the second collision determination region E2, and determines that the fourth condition is not satisfied when the side obstacle is not present within the second collision determination region E2.

That is, in the present modification, when the warning torque T_{SOW} is applied (when F = 1), determination is made as to whether there is a high possibility that the vehicle will collide with the side obstacle based on the vehicle trajectory (second prediction result) predicted by regarding the second imaginary steering angle G2·θ_{c} as the actual steering angle.

When determination is made in step S20 that the fourth condition is satisfied (step S20: YES), the warning torque calculation unit 52 proceeds to step S17 and calculates the warning torque T_{SOW}. Then, the warning torque calculation unit 52 ends the process in the current calculation cycle.

When determination is made in step S20 that the fourth condition is not satisfied (step S20: NO), the warning torque calculation unit 52 proceeds to step S18.

In the second modification of the side obstacle warning torque calculation process, when the second condition and the third condition are satisfied in the case where the warning torque T_{SOW} is not applied (F = 0), the warning torque application flag F is set (F = 1) and the application of the warning torque T_{SOW} is started. When the second condition is not satisfied or the fourth condition is not satisfied in the case where the warning torque T_{SOW} is applied (F = 1), the flag F is reset (F = 0) and the warning torque T_{SOW} is not applied.

That is, the condition for starting the application of the warning torque T_{SOW} is that the second condition and the third condition are satisfied in the case where the warning torque T_{SOW} is not applied (F = 0). The condition for terminating the application of the warning torque T_{SOW} is that the second condition is not satisfied in the case where the warning torque T_{SOW} is applied (F = 1), or that the fourth condition is not satisfied in the case where the warning torque T_{SOW} is applied.

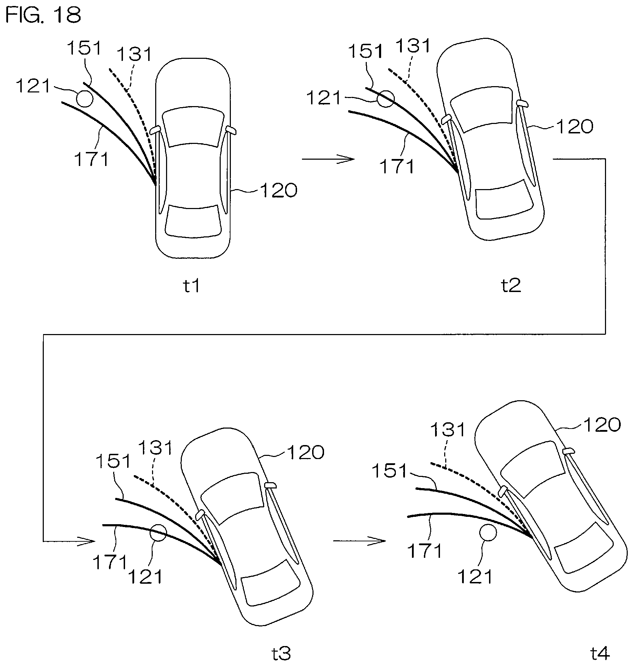

The operation of the second modification of the side obstacle warning torque calculation process will be described with reference to FIG. 18. In the description with reference to FIG. 18, the second condition is satisfied. FIG. 18 shows state changes when the vehicle 120 moves forward while turning left. In FIG. 18, a dashed line 131 indicates the left auxiliary trajectory prediction line generated based on the basic main trajectory prediction line, a continuous line 151 indicates the left auxiliary trajectory prediction line generated based on the first main trajectory prediction line, and a continuous line 171 indicates the left auxiliary trajectory prediction line generated based on the second main trajectory prediction line.

The first collision determination region E1 that is set based on the first main trajectory prediction line is, for example, a region sandwiched by the left auxiliary trajectory prediction line 151 and the corresponding right auxiliary trajectory prediction line (or first main trajectory prediction line) (not shown). The second collision determination region E2 that is set based on the second main trajectory prediction line is, for example, a region sandwiched by the left auxiliary trajectory prediction line 171 and the corresponding right auxiliary trajectory prediction line (or second main trajectory prediction line) (not shown).

At time t1, the warning torque application flag F is reset (F = 0). At time t1, the third condition is not satisfied because the side obstacle 121 is not present within the first collision determination region E1. Therefore, the warning torque T_{SOW} is not applied.

At time t2, the third condition is satisfied because at least part of the side obstacle 121 is present within the first collision determination region E1. Therefore, the warning torque T_{SOW} is applied. The warning torque application flag F is set (F = 1).

At time t3, the fourth condition is satisfied because the side obstacle 121 is not present within the first collision determination region E1 but at least part of the side obstacle 121 is present within the second collision determination region E2. Therefore, the warning torque T_{SOW} remains applied.

At time t4, the fourth condition is not satisfied because the side obstacle 121 is not present within the second collision determination region E2. Therefore, the warning torque T_{SOW} is not applied. The warning torque application flag F is reset (F = 0).

In the second modification of the side obstacle warning torque calculation process, the warning torque T_{SOW} is applied when the second condition and the third condition are satisfied in the state in which the warning torque T_{SOW} is not applied. When the second condition is satisfied in the state in which the warning torque T_{SOW} is applied, the application of the warning torque T_{SOW} is not terminated as long as the fourth condition is satisfied even if the third condition is not satisfied. Thus, it is unlikely that the state in which the warning torque T_{SOW} is applied and the state in which the warning torque T_{SOW} is not applied are repeatedly switched within a short period.

In step S12, the warning torque calculation unit 52 may set the first main trajectory prediction line as follows. That is, the warning torque calculation unit 52 sets, as a first imaginary steering angle (θ_{c} + sign(θ_{c}) × α), a value obtained by adding an offset (sign(θ_{c}) × α) to the actual steering angle θ_{c} such that its absolute value increases. Then, the warning torque calculation unit 52 generates the trajectory prediction line of the reference position Q of the vehicle 120 by regarding the first imaginary steering angle (θ_{c} + sign(θ_{c}) × α) as the actual steering angle, and sets the obtained trajectory prediction line as the first main trajectory prediction line.

The warning torque calculation unit 52 also sets, as a second imaginary steering angle (θ_{c} + sign(θ_{c}) × α + sign(θ_{c}) × β), a value obtained by adding an offset (sign(θ_{c}) × β) to the first imaginary steering angle (θ_{c} + sign(θ_{c}) × α) such that its absolute value increases. β is a predetermined value (real number) larger than 0. Then, the warning torque calculation unit 52 generates the trajectory prediction line of the reference position Q of the vehicle 120 by regarding the second imaginary steering angle (θ_{c} + sign(θ_{c}) × α + sign(θ_{c}) × β) as the actual steering angle, and sets the obtained trajectory prediction line as the second main trajectory prediction line.

That is, it is appropriate that the warning torque calculation unit 52 set the first main trajectory prediction line by predicting the trajectory of the reference position Q of the vehicle 120 by regarding, as the actual steering angle, the first imaginary steering angle that is a steering angle having a larger absolute value than the actual steering angle θ_{c}, and also set the second main trajectory prediction line by predicting the trajectory of the reference position Q of the vehicle 120 by regarding, as the actual steering angle, the second imaginary steering angle that is a steering angle having a larger absolute value than the first imaginary steering angle.

### [Description of Modification of Manual Steering Command Value Calculation Unit]

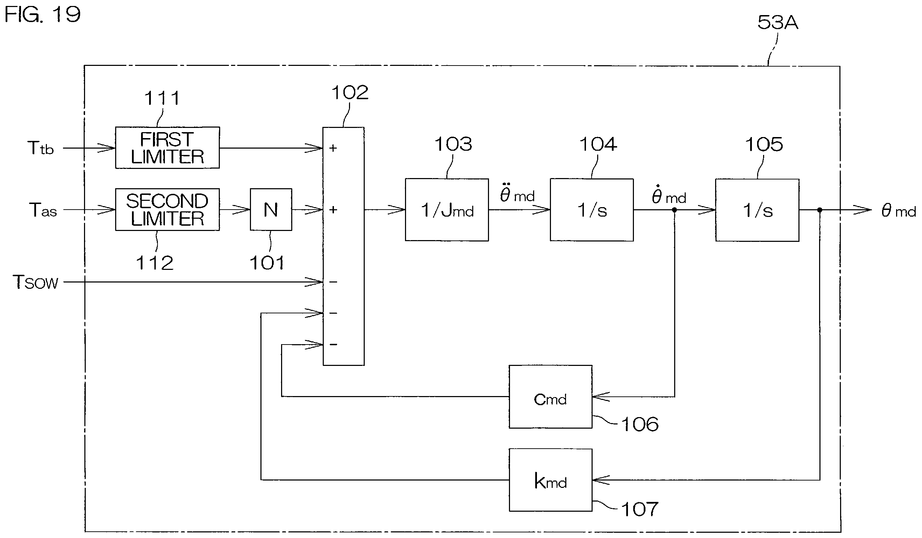

FIG. 19 is a block diagram showing a modification of the manual steering command value calculation unit. In FIG. 19, portions corresponding to those in FIG. 5 described above are represented by the same signs as those in FIG. 5.

A manual steering command value calculation unit 53A in FIG. 19 differs from the manual steering command value calculation unit 53 in FIG. 5 in that a first limiter 111 and a second limiter 112 are added. The first limiter 111 is an example of "first limitation processing unit" according to the present disclosure, and the second limiter 112 is an example of "second limitation processing unit" according to the present disclosure.

The first limiter 111 limits the absolute value of the torsion bar torque T_{tb} input to the manual steering command value calculation unit 53A to a first upper limit value α (α > 0) or less. The second limiter 112 limits the absolute value of the assist torque command value Tₐₛ input to the manual steering command value calculation unit 53A to a second upper limit value β (β > 0) or less.

The first upper limit value α and the second upper limit value β are set by, for example, the warning torque calculation unit 52. When the warning torque application flag F is reset (F = 0), the warning torque calculation unit 52 sets the first upper limit value α and the second upper limit value β to α1 and β1, respectively. When the warning torque application flag F is set (F = 1), the warning torque calculation unit 52 sets the first upper limit value α and the second upper limit value β to α2 smaller than α1 and β2 smaller than β1, respectively. The first upper limit value α and the second upper limit value β may be changed gently along with a change in angle deviation (θ_{c} - θ_{stp,SOW}) and an elapse of time.

Therefore, when the first condition and the second condition are satisfied, the absolute values of the torsion bar torque T_{tb} and the assist torque command value Tₐₛ are reduced. Thus, the ratio of the absolute value of the warning torque T_{SOW} to the absolute value of the sum of the torsion bar torque T_{tb} and the assist torque command value Tₐₛ increases. Accordingly, it is possible to more effectively suppress the collision of the side of the vehicle with the side obstacle.

### [Description of Modification of Motor Control ECU]

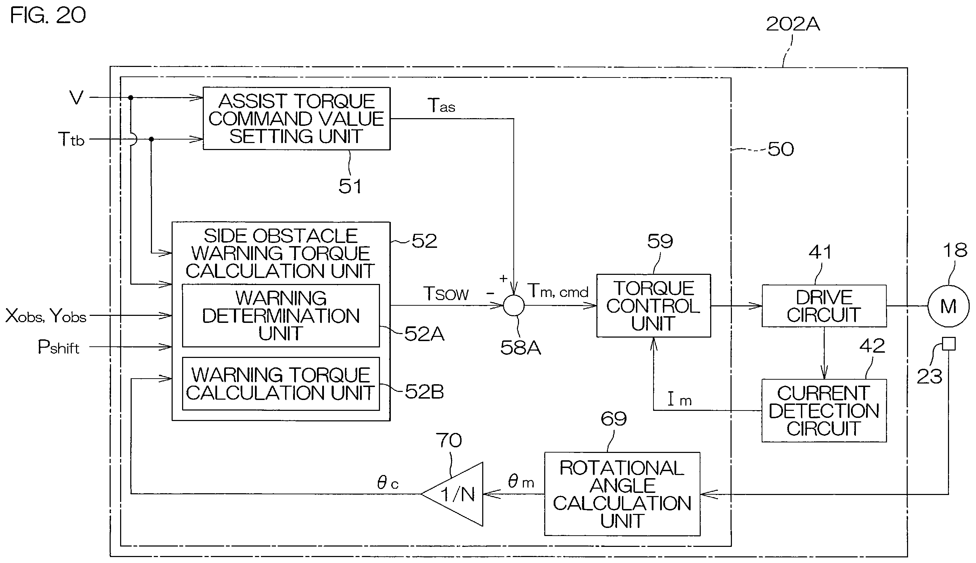

FIG. 20 is a block diagram showing a modification of the motor control ECU. In FIG. 20, portions corresponding to those in FIG. 2 described above are represented by the same signs as those in FIG. 2.

Even in the case where the present modification is applied, the side obstacle position coordinates X_{obs},Y_{obs}, the vehicle speed V, and the shift position information P_{shift} are transmitted from the higher-level ECU 201 to a motor control ECU 202A. In the present modification, for the sake of convenience, the automatic steering command value θ_{ad} and the steering mode signal S_{mode} are not transmitted from the higher-level ECU 201 to the motor control ECU 202A.

The microcomputer 50 in the motor control ECU 202A includes, as the plurality of functional processing units, the assist torque command value setting unit 51, the warning torque calculation unit 52, a subtraction unit 58A, the torque control unit 59, the rotational angle calculation unit 69, and the reduction ratio division unit 70. The assist torque command value setting unit 51, the subtraction unit 58A, and the torque control unit 59 are examples of "control unit" according to the present disclosure. The subtraction unit 58A and the torque control unit 59 are examples of "second control unit" according to the present disclosure.

The assist torque command value setting unit 51 and the torque control unit 59 are the same as the assist torque command value setting unit 51 and the torque control unit 59 in FIG. 2, respectively, and therefore description thereof will be omitted. The rotational angle calculation unit 69 and the reduction ratio division unit 70 are the same as the rotational angle calculation unit 69 and the reduction ratio division unit 70 in FIG. 6, respectively, and therefore description thereof will be omitted.

The warning torque calculation unit 52 constantly performs the same side obstacle warning torque calculation process as the side obstacle warning torque calculation process described with reference to, for example, FIG. 10. The warning torque T_{SOW} calculated by the warning torque calculation unit 52 is provided to the subtraction unit 58A.

The subtraction unit 58A subtracts the warning torque T_{SOW} calculated by the warning torque calculation unit 52 from the assist torque command value Tₐₛ set by the assist torque command value setting unit 51, and outputs the subtraction result as the motor torque command value T_{m,cmd}.

In the modification of the motor control ECU, for example, when the first condition in step S2 in FIG. 10 is satisfied and the second condition in step S3 is satisfied, the warning torque T_{SOW} is calculated based on the above expression (11). The subtraction unit 58A subtracts the warning torque T_{SOW} from the assist torque command value Tₐₛ, and outputs the subtraction result as the motor torque command value T_{m,cmd}. Therefore, the warning torque T_{SOW} acts as a steering reaction force to suppress steering (driver operation) in a direction in which the side of the vehicle may collide with a side obstacle. Thus, the collision of the side of the vehicle with the side obstacle can be suppressed.

In the modification of the motor control ECU, the warning torque calculation unit 52 may perform the same side obstacle warning torque calculation process as the side obstacle warning torque calculation process described with reference to FIG. 11 or 18.

Although the embodiment and modifications of the present disclosure are described above, the present disclosure may also be implemented in other forms.

In the embodiment and modifications of the present disclosure, the second condition is the condition that the vehicle speed V is equal to or smaller than the predetermined first threshold value, the absolute value of the torsion bar torque T_{tb} is equal to or larger than the predetermined second threshold value, and the shift position is other than Parking. However, the second condition may be a condition that the vehicle speed V is equal to or smaller than the predetermined first threshold value, the absolute value of the torsion bar torque T_{tb} is equal to or larger than the predetermined second threshold value and equal to or smaller than a third threshold value, and the shift position is other than Parking. The third threshold value may be set to a predetermined value of, for example, 4.5 Nm or more and 5.5 Nm or less. The second condition may be a condition that the vehicle speed V is equal to or smaller than the predetermined first threshold value, a condition that the absolute value of the torsion bar torque T_{tb} is equal to or larger than the predetermined second threshold value, or a condition that the absolute value of the torsion bar torque T_{tb} is equal to or larger than the predetermined second threshold value and equal to or smaller than the third threshold value.

In the above embodiment and the modification of the motor control ECU, the vehicle may be equipped with a front obstacle sensor that detects a front obstacle present in front of the vehicle, and a rear obstacle sensor that detects a rear obstacle present behind the vehicle. When a front obstacle is detected by the front obstacle sensor, a first warning process may be performed to suppress a collision of the vehicle with the front obstacle. Similarly, when a rear obstacle is detected by the rear obstacle sensor, a second warning process may be performed to suppress a collision of the vehicle with the rear obstacle.

The first warning process may be a process of warning the driver using an image or sound (voice) that the vehicle is approaching the front obstacle. The second warning process may be a process of warning the driver using an image or sound (voice) that the vehicle is approaching the rear obstacle.

When the first warning process or the second warning process is performed before the determination is made to apply the warning torque T_{SOW}, the warning torque T_{SOW} need not be applied as the steering reaction force.

In the above embodiment, the angle control unit 55 (see FIG. 6) includes the feedforward control unit 63. However, the feedforward control unit 63 may be omitted. In this case, the feedback control torque T_{fb} calculated by the feedback control unit 62 is basic target torque.

The above embodiment illustrates the example in which the present disclosure is applied to motor control for a column type EPS. However, the present disclosure is also applicable to motor control for an EPS other than the column type. The present disclosure is also applicable to control on an electric motor for steered angle control of a steer-by-wire system.

Although the embodiment of the present disclosure is described in detail above, this is merely a specific example used to clarify the technical content of the present disclosure. The present disclosure should not be construed as being limited to the specific example, and the scope of the present disclosure is limited only by the appended claims.

This application claims priority based on Japanese Patent Application No. 2023-205910 filed with the Japan Patent Office on December 6, 2023, the entire contents of which are incorporated herein by reference.

### Description of the Reference Numerals

1 ... electric power steering system, 3 ... steered wheel, 4 ... steering operation mechanism, 18 ... electric motor, 51 ... assist torque command value setting unit, 52 ... side obstacle warning torque calculation unit, 52A... warning determination unit, 52B ... warning torque calculation unit, 53 ... manual steering command value calculation unit, 54 ... integrated angle command value calculation unit, 55 ... angle control unit, 56 ... first switch, 57 ... second switch, 58 ... addition unit, 58A ... subtraction unit, 59 ... torque control unit, 201 ... higher-level ECU, 202, 202A ... motor control ECU

## Claims

1. A motor control device that controls drive of an electric motor of a steering device, the motor control device comprising:
a warning determination unit that determines, based on detection information on an obstacle on a side of a vehicle, whether to apply warning torque for suppressing a collision of the vehicle with the obstacle;
a warning torque calculation unit that calculates the warning torque when the warning determination unit determines to apply the warning torque; and
a control unit that controls the electric motor such that the warning torque calculated by the warning torque calculation unit acts as a steering reaction force.

2. The motor control device according to claim 1, wherein the warning determination unit determines to apply the warning torque in response to satisfaction of a condition that the vehicle has a high possibility of colliding with the obstacle and a vehicle speed is equal to or smaller than a predetermined first threshold value, or a condition that the vehicle has a high possibility of colliding with the obstacle and torsion bar torque is equal to or larger than a predetermined second threshold value.

3. The motor control device according to claim 1, wherein the warning determination unit determines to apply the warning torque in response to satisfaction of a condition that the vehicle has a high possibility of colliding with the obstacle, a vehicle speed is equal to or smaller than a predetermined first threshold value, and torsion bar torque is equal to or larger than a predetermined second threshold value.

4. The motor control device according to claim 2 or 3, wherein the warning determination unit predicts a trajectory of the vehicle based on an actual steering angle, information indicating whether the vehicle is moving forward or backward, and the vehicle speed, and determines, based on a prediction result, whether the vehicle has a high possibility of colliding with the obstacle.

5. The motor control device according to claim 2 or 3, wherein the warning determination unit predicts a trajectory of the vehicle based on an imaginary steering angle having a larger absolute value than an actual steering angle, information indicating whether the vehicle is moving forward or backward, and the vehicle speed with the imaginary steering angle regarded as the actual steering angle, and determines, based on a prediction result, whether the vehicle has a high possibility of colliding with the obstacle.

6. The motor control device according to claim 2 or 3, wherein the warning determination unit is configured to:
acquire a first prediction result by predicting a trajectory of the vehicle based on a first imaginary steering angle having a larger absolute value than an actual steering angle, information indicating whether the vehicle is moving forward or backward, and the vehicle speed with the first imaginary steering angle regarded as the actual steering angle, and acquire a second prediction result by predicting the trajectory of the vehicle based on a second imaginary steering angle having a larger absolute value than the first imaginary steering angle, the information indicating whether the vehicle is moving forward or backward, and the vehicle speed with the second imaginary steering angle regarded as the actual steering angle;
when the warning torque is not applied, determine, based on the first prediction result, whether the vehicle has a high possibility of colliding with the obstacle; and
when the warning torque is applied, determine, based on the second prediction result, whether the vehicle has a high possibility of colliding with the obstacle.

7. The motor control device according to claim 1, wherein:
the control unit includes
a manual steering command value calculation unit that calculates a manual steering command value using torsion bar torque,
an integrated angle command value calculation unit that calculates an integrated angle command value by adding the manual steering command value to an automatic steering command value for driving assistance, and
a first control unit that controls the electric motor based on the integrated angle command value;
the manual steering command value calculation unit is configured to calculate the manual steering command value using an equation of motion of a reference model of the steering device; and
the warning torque is added to the equation of motion as the steering reaction force.

8. The motor control device according to claim 7, further comprising a limitation processing unit that limits an absolute value of the torsion bar torque for use in calculation by the manual steering command value calculation unit to an upper limit value or less, wherein when the warning determination unit determines to apply the warning torque, the upper limit value is set to a value lower than the upper limit value in a normal case.

9. The motor control device according to claim 8, wherein:
the manual steering command value calculation unit is configured to calculate the manual steering command value based on the torsion bar torque and an assist torque command value calculated using the torsion bar torque;
the motor control device further includes
a first limitation processing unit that limits the absolute value of the torsion bar torque for use in the calculation by the manual steering command value calculation unit to a first upper limit value or less, and
a second limitation processing unit that limits an absolute value of the assist torque command value for use in calculation by the manual steering command value calculation unit to a second upper limit value or less; and
when the warning determination unit determines to apply the warning torque, the first upper limit value is set to a value lower than the first upper limit value in the normal case, and the second upper limit value is set to a value lower than the second upper limit value in the normal case.

10. The motor control device according to claim 1, wherein the control unit includes:
an assist torque command value calculation unit that calculates an assist torque command value using torsion bar torque;
a subtraction unit that subtracts the warning torque from the assist torque command value; and
a second control unit that controls the electric motor based on a subtraction result from the subtraction unit.

11. The motor control device according to claim 1, further comprising:
a first warning processing unit that performs, based on detection information on a front obstacle that is an obstacle in front of the vehicle, a first warning process for suppressing a collision of the vehicle with the front obstacle; and
a second warning processing unit that performs, based on detection information on a rear obstacle that is an obstacle behind the vehicle, a second warning process for suppressing a collision of the vehicle with the rear obstacle, wherein
when the first warning process or the second warning process is performed before determination is made to apply the warning torque, the warning torque is not applied as the steering reaction force.

## Amended claims

### Amended claims under Art. 19.1 PCT

1. (Currently Amended) A motor control device that controls drive of an electric motor of a steering device, the motor control device comprising:
a warning determination unit that determines, based on detection information on an obstacle on a side of a vehicle, whether to apply warning torque for suppressing a collision of the vehicle with the obstacle;
a warning torque calculation unit that calculates the warning torque when the warning determination unit determines to apply the warning torque; and
a control unit that controls the electric motor such that the warning torque calculated by the warning torque calculation unit acts as a steering reaction force, wherein
the warning determination unit determines to apply the warning torque in response to satisfaction of a condition that the vehicle has a high possibility of colliding with the obstacle and a vehicle speed is equal to or smaller than a predetermined first threshold value, or a condition that the vehicle has a high possibility of colliding with the obstacle and torsion bar torque is equal to or larger than a predetermined second threshold value.

2. (Currently Amended) A motor control device that controls drive of an electric motor of a steering device, the motor control device comprising:
a warning determination unit that determines, based on detection information on an obstacle on a side of a vehicle, whether to apply warning torque for suppressing a collision of the vehicle with the obstacle;
a warning torque calculation unit that calculates the warning torque when the warning determination unit determines to apply the warning torque; and
a control unit that controls the electric motor such that the warning torque calculated by the warning torque calculation unit acts as a steering reaction force, wherein
the warning determination unit determines to apply the warning torque in response to satisfaction of a condition that the vehicle has a high possibility of colliding with the obstacle, a vehicle speed is equal to or smaller than a predetermined first threshold value, and torsion bar torque is equal to or larger than a predetermined second threshold value.

3. (Currently Amended) The motor control device according to claim 1 or 2, wherein the warning determination unit predicts a trajectory of the vehicle based on an actual steering angle, information indicating whether the vehicle is moving forward or backward, and the vehicle speed, and determines, based on a prediction result, whether the vehicle has a high possibility of colliding with the obstacle.

4. (Currently Amended) The motor control device according to claim 1 or 2, wherein the warning determination unit predicts a trajectory of the vehicle based on an imaginary steering angle having a larger absolute value than an actual steering angle, information indicating whether the vehicle is moving forward or backward, and the vehicle speed with the imaginary steering angle regarded as the actual steering angle, and determines, based on a prediction result, whether the vehicle has a high possibility of colliding with the obstacle.

5. (Currently Amended) The motor control device according to claim 1 or 2, wherein the warning determination unit is configured to:
acquire a first prediction result by predicting a trajectory of the vehicle based on a first imaginary steering angle having a larger absolute value than an actual steering angle, information indicating whether the vehicle is moving forward or backward, and the vehicle speed with the first imaginary steering angle regarded as the actual steering angle, and acquire a second prediction result by predicting the trajectory of the vehicle based on a second imaginary steering angle having a larger absolute value than the first imaginary steering angle, the information indicating whether the vehicle is moving forward or backward, and the vehicle speed with the second imaginary steering angle regarded as the actual steering angle;
when the warning torque is not applied, determine, based on the first prediction result, whether the vehicle has a high possibility of colliding with the obstacle; and
when the warning torque is applied, determine, based on the second prediction result, whether the vehicle has a high possibility of colliding with the obstacle.

6. (Currently Amended) The motor control device according to claim 1 or 2, wherein:
the control unit includes
a manual steering command value calculation unit that calculates a manual steering command value using the torsion bar torque,
an integrated angle command value calculation unit that calculates an integrated angle command value by adding the manual steering command value to an automatic steering command value for driving assistance, and
a first control unit that controls the electric motor based on the integrated angle command value;
the manual steering command value calculation unit is configured to calculate the manual steering command value using an equation of motion of a reference model of the steering device; and
the warning torque is added to the equation of motion as the steering reaction force.

7. (Currently Amended) The motor control device according to claim 6, further comprising a limitation processing unit that limits an absolute value of the torsion bar torque for use in calculation by the manual steering command value calculation unit to an upper limit value or less, wherein when the warning determination unit determines to apply the warning torque, the upper limit value is set to a value lower than the upper limit value in a normal case.

8. (Currently Amended) The motor control device according to claim 6, wherein:
the manual steering command value calculation unit is configured to calculate the manual steering command value based on the torsion bar torque and an assist torque command value calculated using the torsion bar torque;
the motor control device further includes
a first limitation processing unit that limits an absolute value of the torsion bar torque for use in calculation by the manual steering command value calculation unit to a first upper limit value or less, and
a second limitation processing unit that limits an absolute value of the assist torque command value for use in calculation by the manual steering command value calculation unit to a second upper limit value or less; and
when the warning determination unit determines to apply the warning torque, the first upper limit value is set to a value lower than the first upper limit value in a normal case, and the second upper limit value is set to a value lower than the second upper limit value in the normal case.

9. (Currently Amended) The motor control device according to claim 1 or 2, wherein the control unit includes:
an assist torque command value calculation unit that calculates an assist torque command value using the torsion bar torque;
a subtraction unit that subtracts the warning torque from the assist torque command value; and
a second control unit that controls the electric motor based on a subtraction result from the subtraction unit.

10. (Currently Amended) The motor control device according to claim 1 or 2, further comprising:
a first warning processing unit that performs, based on detection information on a front obstacle that is an obstacle in front of the vehicle, a first warning process for suppressing a collision of the vehicle with the front obstacle; and
a second warning processing unit that performs, based on detection information on a rear obstacle that is an obstacle behind the vehicle, a second warning process for suppressing a collision of the vehicle with the rear obstacle, wherein
when the first warning process or the second warning process is performed before determination is made to apply the warning torque, the warning torque is not applied as the steering reaction force.
